# EUROPEAN PATENT APPLICATION

(11) **EP 4 773 038 A1**
(43) Date of publication of application: **08.07.2026**
(21) Application number: 24900822.8
(22) Date of filing: 14.10.2024
(51) Int. Cl.: G06F 40/58, G06F 40/106, G06F 40/109, G06F 9/451, G06F 9/448, G06F 3/04817, G06F 3/0482, G06F 3/0485, G06F 3/04886, H04L 51/04

(54) **DEVICE, METHOD, AND STORAGE MEDIUM FOR PROVIDING TRANSLATION OF TEXT IN CONTENT**

(30) Priority: 08.12.2023 KR 20230177553; 02.01.2024 KR 20240000621; 01.02.2024 KR 20240016260
(71) Applicant: Samsung Electronics Co., Ltd., Suwon-si, Gyeonggi-do 16677 (KR)
(72) Inventor: YOON, Seongjoon, Suwon-si Gyeonggi-do 16677 (KR); JEON, Heuijin, Suwon-si Gyeonggi-do 16677 (KR); KIM, Junsung, Suwon-si Gyeonggi-do 16677 (KR); JEON, Dami, Suwon-si Gyeonggi-do 16677 (KR); KIM, Sangheon, Suwon-si Gyeonggi-do 16677 (KR); LIM, Yeunwook, Suwon-si Gyeonggi-do 16677 (KR); KIM, Jinhyung, Suwon-si Gyeonggi-do 16677 (KR)
(74) Representative: Gulde & Partner
(86) International application number: PCT/KR2024/015464
(87) International publication number: WO 2025/121634

(57) **Abstract**

This electronic device may comprise: a memory storing instructions; a display; and at least one processor. The instructions, when executed individually or collectively by the at least one processor, may instruct the electronic device to: based on executing a first software application, display, via the display, a screen of the first software application; based on at least a part of an input for the screen, display, via the display, the screen including a view area including contents having a text written in a first language and having a first size., based on a function of a second software application being activated while displaying the screen including the view area having the first size, display, via the display, the screen including the view area, which includes other contents having the text written in the first language and another text written in a second language different from the first language, and has a second size bigger than the first size.

## Description

### [Technical Field]

The following descriptions relate to a device, a method, and a storage medium for providing translation of a text in contents.

### [Background Art]

A software application may provide a function of translating a text written in a specific language into a text written in another language. For example, for a text inputted by a user, an electronic device may generate a translated text by using the function provided through the software application. For example, the software application may be installed in the electronic device or may be provided through a server outside the electronic device.

The above-described information may be provided as a related art for the purpose of helping understanding of the present disclosure. No argument or decision is made as to whether any of the above description may be applied as a prior art related to the present disclosure.

### [Disclosure]

### [Technical Solution]

An electronic device may comprise memory storing instructions. The electronic device may comprise a display. The electronic device may comprise a processor. The instructions, when executed by the processor, may cause the electronic device to, based on executing a first software application, display, via the display, a screen of the first software application. The instructions, when executed by the processor, may cause the electronic device to, based on at least a part of an input for the screen, display, via the display, the screen including a view area including contents having a text written in a first language and having a first size. The instructions, when executed by the processor, may cause the electronic device to, based on a function of a second software application being activated while displaying the screen including the view area having the first size, display, via the display, the screen including the view area, which includes other contents having the text written in the first language and another text written in a second language different from the first language, and has a second size bigger than the first size.

A method performed by an electronic device may comprise, based on executing a first software application, displaying a screen of the first software application. The method may comprise, based on at least a part of an input for the screen, displaying, via the display, the screen including a view area including contents having a text written in a first language and having a first size. The method may comprise, based on a function of a second software application being activated while displaying the screen including the view area having the first size, displaying the screen including the view area, which includes other contents having the text written in the first language and another text written in a second language different from the first language, and has a second size bigger than the first size.

A non-transitory computer-readable storage medium, when executed by a processor of an electronic device comprising a display, may store one or more programs including instructions that cause to, based on executing a first software application, display, via the display, a screen of the first software application. The non-transitory computer-readable storage medium, when executed by the processor, may store one or more programs including instructions that cause to, based on at least a part of an input for the screen, display, via the display, the screen including a view area including contents having a text written in a first language and having a first size. The non-transitory computer-readable storage medium, when executed by the processor, may store one or more programs including instructions that cause to, based on a function of a second software application being activated while displaying the screen including the view area having the first size, display, via the display, the screen including the view area, which includes other contents having the text written in the first language and another text written in a second language different from the first language, and has a second size bigger than the first size.

### [Description of the Drawings]

FIG. 1 is a block diagram of an electronic device in a network environment, according to various embodiments.
FIG. 2 illustrates an example for a method in which an electronic device translates contents included in a screen of a software application and displays a screen including a translated text, according to an embodiment.
FIG. 3A illustrates an example of a block diagram of a functional configuration of an electronic device, according to an embodiment.
FIG. 3B illustrates an example for a structure of a software application and a framework of an electronic device, according to an embodiment.
FIG. 4 illustrates an example of an operation flow for a method in which an electronic device displays a screen including contents of a first software application according to whether a function for translation of a second software application is activated, according to an embodiment.
FIG. 5A illustrates an example of hierarchy information configuring a screen of a first software application, according to an embodiment.
FIG. 5B illustrates an example of first information for a view area of hierarchy information and second information for a text, according to an embodiment.
FIG. 6 illustrates an example of an operation flow for a method of activating a function for translation of a second software application, according to an embodiment.
FIG. 7 illustrates an example of a signal flow for a method of generating a translation model and providing a translation function by using the generated translation model, according to an embodiment.
FIG. 8 illustrates an example of an operation flow for a method of providing a translation function according to whether a screen is changed, according to an embodiment.
FIGS. 9A to 9D illustrate an example of a method of translating a text included in a screen and displaying the screen including the translated text, according to an embodiment.
FIGS. 10A to 10C illustrate an example of a method of activating a function of a second software application based on an input to an icon of a keyboard application, according to an embodiment.
FIGS. 10D and 10E illustrate an example of a method of changing a setting of a second software application through a change in a setting of a keyboard application, according to an embodiment.
FIG. 11 illustrates an example of a method of activating a function of a second software application in a system setting, according to an embodiment.
FIG. 12A illustrates an example of a method of providing summary information of contents, according to an embodiment.
FIG. 12B illustrates an example of a method of providing a visual effect for contents, according to an embodiment.
FIG. 12C illustrates an example of a method of translating a text in contents having an image and displaying a screen including the translated text, according to an embodiment.
FIGS. 13A and 13B illustrate an example of a method of changing a setting of a second software application through an input to a visual object, according to an embodiment.
FIG. 14 illustrates an example of an operation flow for a method in which an electronic device translates contents included in a screen of a software application and displays a screen including a translated text, according to an embodiment.
FIG. 15 illustrates an example of a generative artificial intelligence system, according to an embodiment.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B).

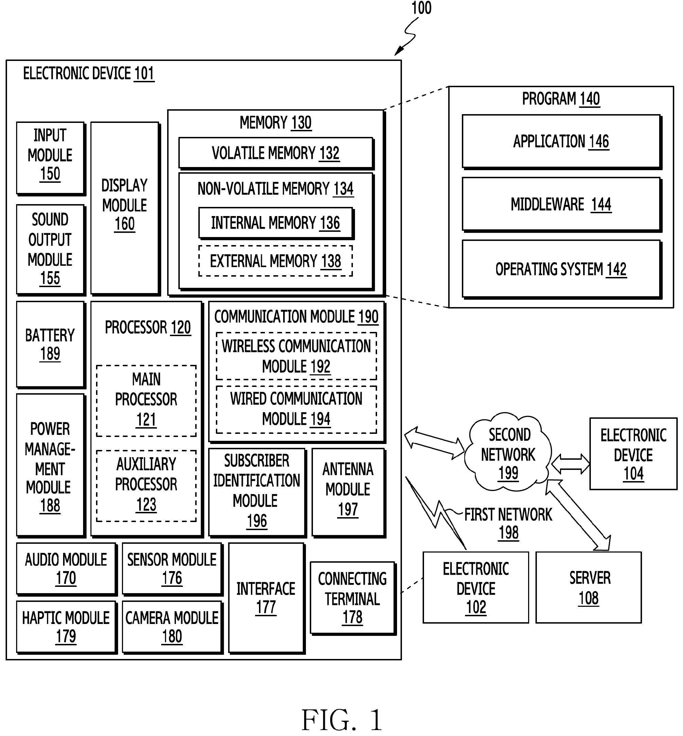

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device 101 may provide a keyboard translation function of a keyboard application stored in the electronic device 101. The keyboard translation function may indicate a function for translating a text being written by using the keyboard application. For example, the electronic device 101 may generate, by using the keyboard translation function, a text written in a first language according to a user input to an executable object of the keyboard application, and another text written in a second language different from the first language.

In addition, the user may request translation for contents provided through the electronic device 101. For example, while using a software application that provides a social network service (SNS), the user may want to translate a text included in the contents in the software application and to check the translated text. In this case, the user may check the translated text through another software application that provides a translation function after copying the text for the contents. Additionally, in a case that the software application that provides SNS provides its own translation function, the translation function provided by the software application may display the translated text by replacing a text to be translated, or display the translated text in a superimposed state with respect to the text to be translated.

Hereinafter, a device, a method, and a storage medium according to embodiments of the present disclosure propose a software application (hereinafter, referred to as a second software application) for providing real-time translation regardless of a software application (hereinafter, referred to as a first software application) being executed on the electronic device 101. In other words, the device, the method, and the storage medium according to embodiments of the present disclosure may provide the real-time translation by using the second software application, regardless of whether the first software application provides a translation function. The device, the method, and the storage medium according to embodiments of the present disclosure may perform translation for contents of the first software application through the second software application and provide information on a framework by using a translated text.

The device, the method, and the storage medium according to embodiments of the present disclosure may provide the user with contents translated in real time on the framework through the second software application while using the first software application. Accordingly, regardless of whether the first software application provides the translation function, convenience may be provided for the user to check the translated contents without performing an additional input.

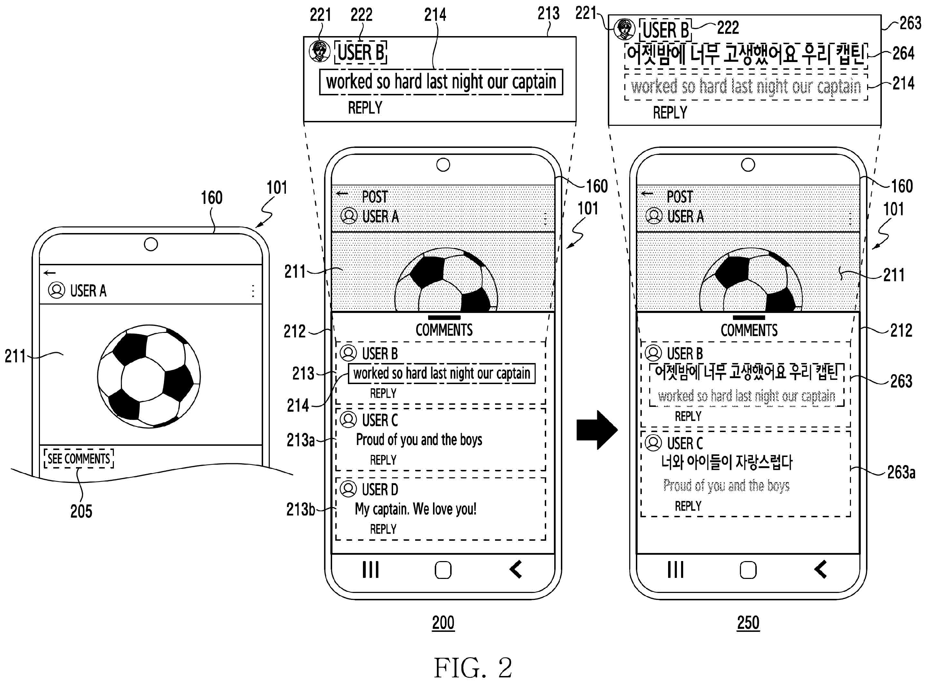

FIG. 2 illustrates an example for a method in which an electronic device translates contents included in a screen of a software application and displays a screen including a translated text, according to an embodiment.

An electronic device 101 of FIG. 2 may be an example of the electronic device 101 of FIG. 1. For example, a display 160 of FIG. 2 may include at least a part of the display module 160 of FIG. 1. FIG. 2 illustrates examples 200 and 250 of a method in which the electronic device 101 translates a text of contents included in a screen 211 of a first software application and displays the screen 211 including the translated text. FIG. 2 illustrates a case where the first software application is an SNS software application, but an embodiment of the present disclosure is not limited thereto. For example, the first software application may include a software application that provides a messenger service or a software application that provides real-time streaming.

For example, the first software application may not provide a translation function by itself. However, embodiments of the present disclosure are not limited thereto. For example, even when providing the translation function in the first software application, the electronic device 101 may display the translated text through a live translation function of a second software application. For example, the electronic device 101 may display the translated text through the live translation function of the second software application before obtaining an input for executing the translation function of the first software application. In addition, in a case of using the live translation function of the second software application, the electronic device 101 may display the translated text without changing a composition (or disposition) of visual objects (or view objects) displayed in the screen 211 of the second software application.

Referring to the example 200, the electronic device 101 may display the screen 211 of the first software application through the display 160. For example, the electronic device 101 may execute the first software application based on obtaining a user input to an icon (or a widget) indicating the first software application. In this case, the first software application may be executed on a foreground. While the first software application is being executed, the electronic device 101 may display the screen 211, which is an execution screen of the first software application. For example, the screen 211 may be referred to as a user interface (UI). The screen 211 may be a screen that provides an object 205 executable through interaction (e.g., a touch input) with the user while the first software application is being executed, or provides contents including a visual object (e.g., a text, or an image).

For example, the electronic device 101 may display a screen object 212 based on an input to the screen 211. For example, the electronic device 101 may display the screen object 212 based on obtaining the input for an area (e.g., the executable object 205) of the screen 211. For example, the screen object 212 may be at least partially superimposed on the screen 211. In a case of the first software application providing SNS, the screen object 212 may include a comment on contents posted on the screen 211. However, the embodiment of the present disclosure is not limited thereto. For example, the screen object 212 may pop up based on the input to the executable object 205 of the screen 211.

For example, the screen object 212 may include at least one view area. In the example 200 of FIG. 2, the screen object 212 may include three view areas 213, 213a, and 213b. For example, each of the view areas 213, 213a, and 213b may be distinguished for each identification information of users who use the first software application (or subscribe to the first software application). For example, the view area 213 may indicate a comment written by a first user (e.g., USER B), the view area 213a may indicate a comment written by a second user (e.g., USER C), and the view area 213b may indicate a comment written by a third user (e.g., USER D).

For example, each of the view areas 213, 213a, and 213b may include contents. For example, the view area 213 may include an image 221 set by the first user, identification information 222 of the first user, and a text 214 written by the first user. For example, the text 214 may be written in a first language (e.g., English). For example, the text 214 may contain a sentence written in English, "worked so hard last night our captain". However, the embodiment of the present disclosure is not limited thereto. For example, the first language may include another language (e.g., Japanese or Chinese) different from English.

Referring to the example 250, the electronic device 101 may display the screen 211 including the translated text by using the second software application different from the first software application. For example, the electronic device 101 may execute the second software application in a background. For example, the second software application may be an application mounted inside the electronic device 101 when the electronic device 101 is produced. However, the embodiment of the present disclosure is not limited thereto. For example, the electronic device 101 may download the second software application. For example, the second software application may be an application for recognizing data based on the user's interaction with the electronic device 101, such as chatting and pictures, that occur while the user uses the electronic device 101.

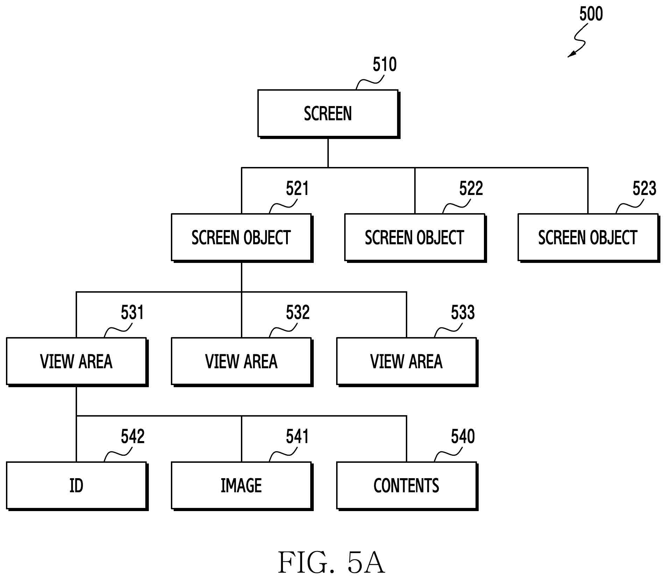

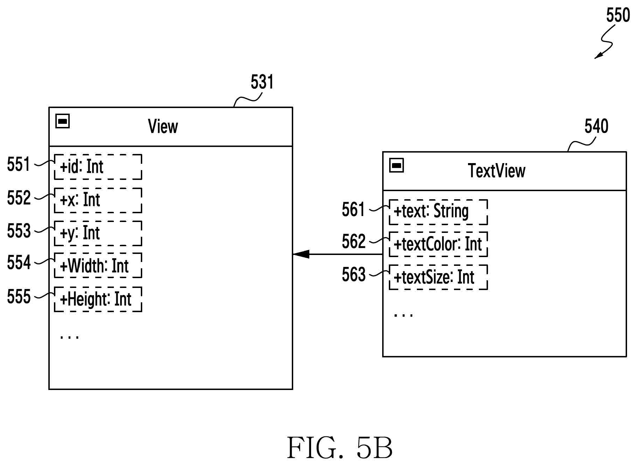

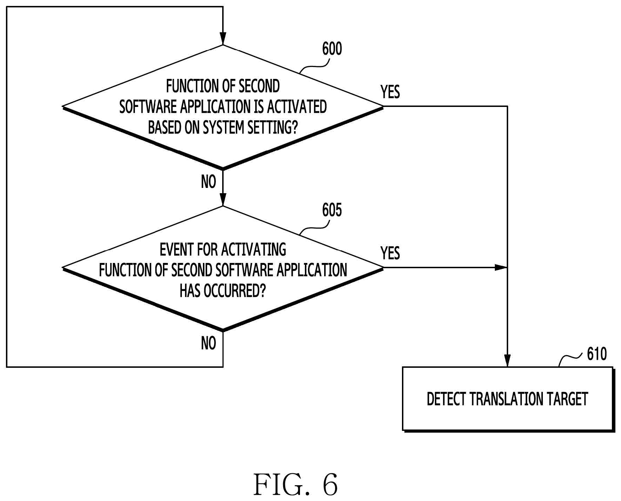

According to an embodiment, the electronic device 101 may determine whether a function of the second software application is activated. The function may be activated through a setting or may be activated based on a specific event. A specific content regarding a method of activating the function will be described in FIGS. 6, 10A, and 11. For example, the function of the second software application may indicate a function of obtaining information (hereinafter, hierarchy information) for the screen 211 obtained from the first software application, translating a recognized text part based on the hierarchy information, and reconstructing the hierarchy information by using the translated text. For example, the function of the second software application may be referred to as a live translation function. A specific content regarding hierarchy information will be described in FIGS. 5A and 5B below. The hierarchy information may be hierarchy information for a part of a screen displayed on a display area of the display 160 of the electronic device 101 among screens that may be provided by the first software application.

According to an embodiment, as the function of the second software application is activated, the electronic device 101 may reconstruct the hierarchy information for the screen 211 of the first software application. According to an embodiment, the electronic device 101 may recognize information (hereinafter referred to as first information) for the view area 213 in the hierarchy information and information (hereinafter referred to as second information) for the text 214 written in the first language by using the hierarchy information obtained from the first software application. According to an embodiment, the electronic device 101 may translate the text 214 extracted from the second information through the second software application. For example, the electronic device 101 may translate the text 214 by using a translation model stored in the second software application or a translation model installed in the electronic device 101. However, the embodiment of the present disclosure is not limited thereto. For example, the electronic device 101 may translate the text 214 by using a server that provides a translation service. For example, the translation model may include a statistical model (e.g., an artificial intelligence model) learned for translation between a plurality of languages. For example, languages to be used for the translation may be set by a user or based on a text used by the user or a language set through a system setting (or a global setting) of the electronic device 101. For example, the languages may include a language (or a source language) of a text to be translated and a language (or a target language) of the translated text.

According to an embodiment, the electronic device 101 may refrain from (or skip) translating a portion of texts of the screen 211. For example, electronic device 101 may not translate the portion of texts in the screen 211. For example, the portion of texts excluded from translation may include the identification information 222 of the user of the screen 211, a uniform resource locator (URL), or some executable object (e.g., "reply") in the screen 211. However, the embodiment of the present disclosure is not limited thereto.

According to an embodiment, the electronic device 101 may generate third information for a text 264 translated through the second software application and reconstruct (or change) the first information by using the generated third information. For example, the translated text 264 may be " 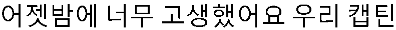 " written in a second language (e.g., Korean). For example, the third information for the translated text 264 may include at least one of letters of the translated text 264, a color of the translated text 264, or a size of the translated text 264.

For example, the electronic device 101 may reconstruct (or change, update) the first information by using the third information for the translated text 264. The first information may be reconstructed to include the second information and the third information. A specific content regarding the hierarchy information will be described in FIGS. 5A and 5B below. In addition, the information for the screen 211 may be reconstructed (or changed) according to the changed first information.

Referring to example 250, the electronic device 101 may display a view area 263 including contents having the text 214 written in the first language and a text 264 translated from the first language to the second language by using the reconstructed information for the screen 211. For example, the reconstructed information for the screen 211 may include the first information updated with the third information. For example, the view area 263 may include the image 221 set by the first user, the identification information 222 of the first user, the text 214 written in the first language by the first user, and the text 264 translated into the second language. According to an embodiment, a size of the view area 263 may be changed from a size of the view area 213. For example, in a case that the size of the view area 213 is a first size, the size of the view area 263 may have a second size bigger than the first size. For example, the second size of the view area 263 may be determined based on the reconstructed information (or the reconstructed first information) for the screen 211. In addition, the first size of the view area 213 may be determined based on the information for the screen 211 (or the first information, or the first information before the reconstruction).

The screen object 212 included in the screen 211 of the example 250 may have the same size as the screen object 212 included in the screen 211 of the example 200. In other words, information indicating the size of the screen object 212 included in the reconstructed information for the screen 211 may not be reconstructed. However, the number of view areas included in the screen object 212 may be changed. The screen object 212 of the example 200 may include three view areas 213, 213a, and 213b, and the screen object 212 of the example 250 may include two view areas 263 and 263a. For example, each of the view areas 263 and 263a included in the screen object 212 of the example 250 may further include translated text. Accordingly, the view area 263 may have a bigger size than the view area 213, and the view area 263a may have a bigger size than the view area 213a. In other words, in order to display the translated text, since the size of the view areas is changed and the size of the screen object 212 is maintained, the number of view areas included in the screen object 212 may be changed.

According to an embodiment, the translated text 264 of the view area 263 may have a first visual effect, and the text 214 of the view area 263 may have a second visual effect. For example, in a case that the first visual effect has a first color, the second visual effect may have a second color having a saturation lower than that of the first color. In this case, unlike the view area 263, the text 214 of the view area 213 may have the first visual effect. In other words, the electronic device 101 may apply the first visual effect to the translated text 264 in order to increase the user's recognition. In the example, a case where a visual effect includes a color of a text is described, but the embodiment of the present disclosure is not limited thereto. For example, the visual effect may include a shade, a size, a thickness, or a font (or typeface) of the text.

According to an embodiment, the electronic device 101 may set the third information for the text 264 according to the first visual effect, and set (or change or update) the second information for the text 214 according to the second visual effect. In other words, each of the second information and the third information may be set according to a visual effect.

In the examples 200 and 250 of FIG. 2, an example in which the visual effect of the text 214 of the view area 263 is changed from the first visual effect to the second visual effect by displaying the translated text 264 of the view area 263 is illustrated, but the embodiment of the present disclosure is not limited thereto. For example, while displaying the translated text 264 of the view area 263, the electronic device 101 may display the view area 263 including the translated text 264 and the text 214 having the first visual effect. Alternatively, for example, while displaying the translated text 264 of the view area 263, the electronic device 101 may display the view area 263 including the text 214 having the first visual effect and the translated text 264 having the second visual effect.

In addition, in the examples 200 and 250 of FIG. 2, the view area 263 including the translated text 264 and the text 214 disposed below the translated text 264 is illustrated, but the embodiment of the present disclosure is not limited thereto. For example, the view area 263 may include the text 214 and the translated text 264 disposed below the text 214.

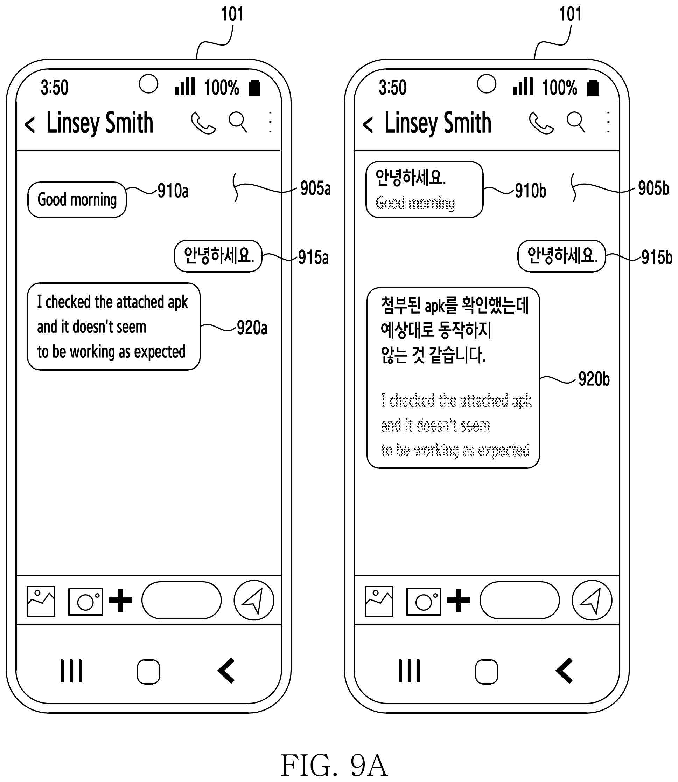

In the examples 200 and 250 of FIG. 2, for convenience of explanation, a view area (or screen) further including a text translated from the first language (e.g., English) to the second language (e.g., Korean) is illustrated, but the embodiment of the present disclosure is not limited thereto. For example, the electronic device 101 may further display a text translated from a plurality of first languages (e.g., English, or Japanese) into the second language (e.g., Korean). Various examples of a method of displaying the translated text by the electronic device 101 will be described in FIGS. 9A to 9D below.

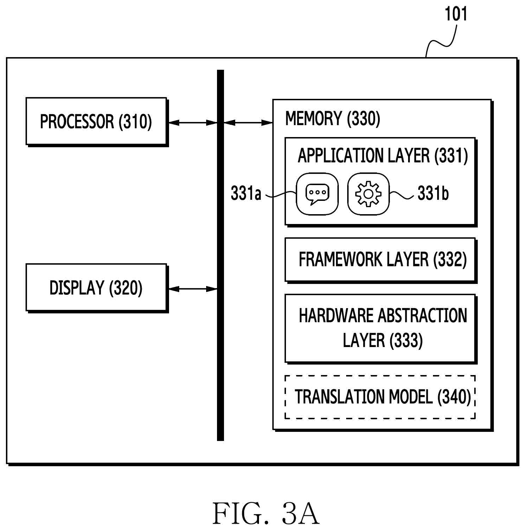

FIG. 3A illustrates an example of a block diagram of a functional configuration of an electronic device, according to an embodiment.

An electronic device 101 of FIG. 3A may be an example of the electronic device 101 of FIG. 1. For example, the electronic device 101 may be connected to an external electronic device (not illustrated) based on a wired network and/or a wireless network. For example, the wired network may include a network such as the Internet, a local area network (LAN), a wide area network (WAN), or a combination thereof. For example, the wireless network may include a network such as long term evolution (LTE), 5g new radio (NR), wireless fidelity (WiFi), Zigbee, near field communication (NFC), Bluetooth, Bluetooth low-energy (BLE), or a combination thereof. The electronic device 101 may be directly connected to the external electronic device or may be indirectly connected through one or more routers and/or an access point (AP). For example, the external electronic device may include a server that provides a translation service.

Referring to FIG. 3A, the electronic device 101 according to an embodiment may include at least one of a processor 310, a display 320, and memory 330. However, an embodiment of the present disclosure is not limited thereto. For example, the processor 310, the display 320, and/or the memory 330 may be electronically and/or operably coupled with each other by a communication bus. Hereinafter, hardware components being operably coupled may mean that a direct or indirect connection between the hardware components is established by wire or wirelessly so that a second hardware component among the hardware components is controlled by a first hardware component. Although illustrated based on different blocks, the embodiment is not limited thereto, and a portion (e.g., the processor 310, the display 320, and the memory 330) of the hardware components illustrated in FIG. 3A may be included in a single integrated circuit such as a system on a chip (SoC). A type and/or the number of hardware components included in the electronic device 101 is not limited as illustrated in FIG. 3A. For example, the electronic device 101 may include only a portion of the hardware components illustrated in FIG. 3A.

The processor 310 of the electronic device 101 according to an embodiment may include a hardware component for processing data based on one or more instructions. The hardware component for processing data may include, for example, an arithmetic and logic unit (ALU), a floating point unit (FPU), and a field programmable gate array (FPGA). As an example, the hardware component for processing data may include a central processing unit (CPU), a graphics processing unit (GPU), a digital signal processing (DSP), a microcontroller (MCU), and/or a neural processing unit (NPU). The number of processors 310 may be one or more. For example, the processor 310 may have a structure of a multi-core processor such as a dual core, a quad core, or a hexa core. For the processor 310 of FIG. 3A, content regarding the processor 120 of FIG. 1 may be applied in substantially the same manner.

For example, the processor 310 of the electronic device 101 may include various processing circuitry and/or multiple processors. For example, the term "processor" used in the present document, including the scope of claims, may include various processing circuitry including at least one processor, and one or more of the at least one processor may be configured to perform various functions described below individually and/or collectively in a distributed manner. As used herein, in a case that "processor", "at least one processor", and "one or more processors" are described as configured to perform various functions, these terms, for example, are not limited thereto and encompass situations in which one processor performs a portion of the cited functions and another processor(s) performs another portion of the cited functions, and situations in which one processor may perform all of the cited functions. Additionally, the at least one processor may include a combination of processors that perform various functions listed/disclosed in a distributed manner, for example. The at least one processor may execute program instructions to achieve or perform various functions.

The display 320 of the electronic device 101 according to an embodiment may output visualized information to a user. The number of displays 320 included in the electronic device 101 may be one or more. For example, the display 320 may output the visualized information to the user by being controlled by the processor 310 and/or a graphic processing unit (GPU) (not illustrated). The display 320 may include a flat panel display (FPD) and/or electronic paper. The FPD may include a liquid crystal display (LCD), a plasma display panel (PDP), a digital mirror device (DMD), one or more light emitting diodes (LEDs), and/or a micro LED. The LED may include an organic LED (OLED). As for a specific content regarding the display 320 of FIG. 3A, the content regarding the display module 160 of FIG. 1 may be applied in substantially the same manner.

The electronic device 101 according to an embodiment may include the memory 330. The memory 330 may include a hardware component for storing data and/or instructions inputted to and/or outputted from the processor 310. The memory 330 may include, for example, a volatile memory such as a random-access memory (RAM), and/or a non-volatile memory such as a read-only memory (ROM). For example, the volatile memory may include at least one of a dynamic RAM (DRAM), a static RAM (SRAM), a cache RAM, and a pseudo SRAM (PSRAM). The non-volatile memory may include, for example, at least one of a programmable ROM (PROM), an erasable PROM (EPROM), an electrically erasable PROM (EEPROM), a flash memory, a hard disk, a compact disk, and an embedded multimedia card (eMMC). As for a specific content regarding the memory 330 of FIG. 3A, the content of the memory 130 of FIG. 1 may be applied in substantially the same manner.

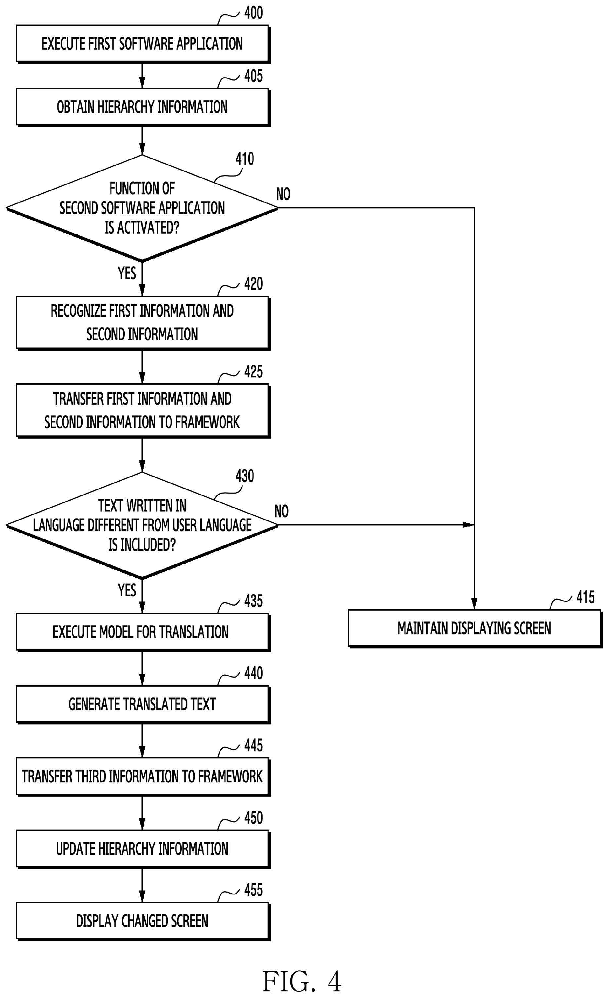

Referring to FIG. 3A, in the memory 330 of the electronic device 101 according to an embodiment, one or more instructions (or commands) indicating a calculation and/or an operation to be performed on data by the processor 310 of the electronic device 101 may be stored. A set of one or more instructions may be referred to as a program, firmware, an operating system, a process, a routine, a sub-routine and/or an application. Hereinafter, an application being installed in an electronic device (e.g., the electronic device 101) may mean that one or more instructions provided in a form of the application are stored in the memory 330, and that the one or more applications are stored in a format (e.g., a file with an extension designated by the operating system of the electronic device 101) executable by a processor of the electronic device. The electronic device 101 according to an embodiment may perform operations of FIGS. 4, 6, 7, 8, and 14 by executing one or more instructions stored in the memory 330.

Referring to FIG. 3A, according to an embodiment, programs installed in the electronic device 101 may be classified into any one of different layers, including an application layer 331, a framework layer 332, and/or a hardware abstraction layer (HAL) 333, based on a target. Programs (e.g., driver) designed to target hardware (e.g., the display 320) of the electronic device 101 may be classified in the hardware abstraction layer 333. For example, programs (e.g., a view framework, or a translation framework) designed to target at least one of the hardware abstraction layer 333 and/or the application layer 331 may be classified in the framework layer 332. The programs classified in the framework layer 332 may provide an application programming interface (API) that is executable based on another program.

Referring to FIG. 3A, according to an embodiment, a program designed to target a user who controls the electronic device 101 may be classified in the application layer 331. For example, the program classified in the application layer 331 may include a first software application 331a that provides SNS, a messenger, or a real-time streaming service, and a second software application 331b that provides a contents capture service. However, the embodiment of the present disclosure is not limited thereto. For example, the program classified in the application layer 331 may cause execution of a function supported by the programs classified in the framework layer 332 by calling API.

Referring to FIG. 3A, according to an embodiment, the memory 330 may include a translation model 340. For example, the translation model 340 may be used to translate a translation target (e.g., contents having a text, or contents having an image) requested from the second software application 331b. In FIG. 3A, it is illustrated that the translation model 340 is stored in the memory 330, but the embodiment of the present disclosure is not limited thereto. For example, the translation model 340 may be stored in the second software application 331b. Alternatively, for example, the electronic device 101 may perform translation through an external electronic device that provides a translation function instead of the translation model 340.

According to an embodiment, the memory 330 may store information for a plurality of languages for performing the translation. For example, the information for the plurality of languages may be referred to as a language pack. For example, the language pack may be learned in translation model 340 or stored in a separate storage space.

Although not illustrated in FIG. 3A, the electronic device 101 according to an embodiment may include communication circuitry. For example, the communication circuitry may include hardware for supporting transmission and/or reception of electrical signals between the electronic device 101 and the external electronic device. For example, the communication circuitry may include at least one of a modem (MODEM), an antenna, and an optic/electronic (O/E) converter. The communication circuitry may support transmission and/or reception of electrical signals based on various types of communication means such as Ethernet, Bluetooth, Bluetooth low energy (BLE), ZigBee, long term evolution (LTE), and 5G new radio (NR). As for a specific content regarding the communication circuitry of FIG. 3A, the communication module 190 and/or the antenna module 197 of FIG. 1 may be applied in substantially the same manner.

Although not illustrated in FIG. 3A, according to an embodiment, the electronic device 101 may include an output means for outputting information in a form other than a visualized form. For example, the electronic device 101 may include a speaker for outputting an acoustic signal or sound. For example, the electronic device 101 may include an actuator (or a motor) for providing haptic feedback based on vibration.

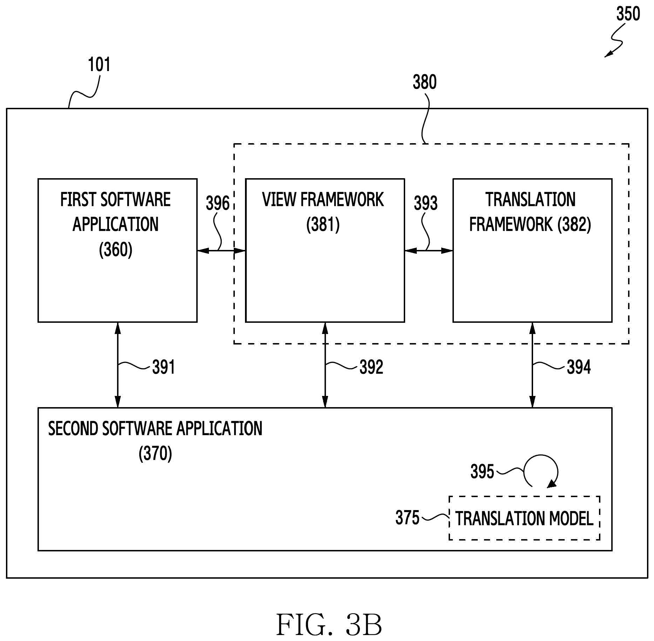

FIG. 3B illustrates an example for a structure of a software application and a framework of an electronic device, according to an embodiment.

An electronic device 101 of FIG. 3B may be an example of the electronic device 101 of FIG. 3A. For example, a structure 350 of the software application and the framework of the electronic device 101 illustrated in FIG. 3B may indicate an example of the application layer 331 and framework layer 332 of the memory 330 of the electronic device 101 of FIG. 3A.

Referring to FIG. 3B, the structure 350 may include a first software application 360, a second software application 370, a view framework 381, and a translation framework 382. In the example of FIG. 3B, a structure of a framework layer in which the view framework 381 and the translation framework 382 are implemented as separate components is illustrated, but an embodiment of the present disclosure is not limited thereto. For example, the electronic device 101 may include a framework 380 in which the view framework 381 and the translation framework 382 are implemented as one component. A structure or a function of the framework 380 of FIG. 3B may be changed according to an operating system supported by the electronic device 101. In addition, embodiments of the present disclosure are not limited to a name of the framework 380, but may also be applied to a configuration that performs substantially the same function as the framework 380.

According to an embodiment, the first software application 360 may include a software application that provides a service for interacting with a user, based on a screen (or an execution screen) displayed through a display 320 of the electronic device 101 while being executed on a foreground of the electronic device 101. For example, the first software application 360 may include SNS, a messenger, or a streaming service. However, the embodiment of the present disclosure is not limited thereto.

According to an embodiment, the second software application 370 may be an application (or a widget) for providing a recommended application (or a service) that guarantees compatibility of the electronic device 101. For example, the second software application 370 may obtain information from a software application of the electronic device 101 by using a contents capture service (or a contents capture function) (or by analyzing a screen (e.g., the screen 211 of FIG. 2) displayed on a display of the electronic device 101). For example, the second software application 370 may provide a live translation function (or function) based on the information. For example, the live translation function of the second software application 370 may indicate a function of obtaining hierarchy information obtained from the first software application 360, performing translation of a text part recognized through the framework 380 (or the view framework 381 and the translation framework 382) based on the obtained hierarchy information, and reconstructing the hierarchy information by using the translated text. The hierarchy information may be hierarchy information for a part of a screen displayed on a display area of the display 160 of the electronic device 101 among screens that may be provided by the first software application 360.

In FIG. 3B, a case where the second software application 370 providing the live translation function is implemented in the application layer together with the first software application 360 is described, but the embodiment of the present disclosure is not limited thereto. For example, the live translation function may be implemented in the framework 380.

According to an embodiment, the second software application 370 may include a translation model 375. For example, the translation model 375 may be implemented as a function of the second software application 370. However, the embodiment of the present disclosure is not limited thereto. For example, the translation model 375 may be stored in a storage space included in the electronic device 101 outside the second software application 370. For example, the translation model 375 may be used to translate a translation target (e.g., contents having a text, or contents having an image) requested from the second software application 370.

According to an embodiment, the view framework 381 may be a framework directly connected to the first software application 360. For example, the view framework 381 may recognize a part in which translation is required in a view area by using the hierarchy information (or at least a part of the hierarchy information) obtained from the second software application 370. For example, the part in which the translation is required may include a part of the view area newly added or updated. The view framework 381 may recognize the part and transfer the recognized part to the translation framework 382.

According to an embodiment, the translation framework 382 may transfer a request for translation for the part received from the view framework 381 to the translation model 375. For example, the translation framework 382 may recognize that translation for the part is required, and may transfer the request including the information for the part to the translation model 375.

Referring to FIG. 3B, the electronic device 101 may obtain hierarchy information 391 from the first software application 360. According to an embodiment, the hierarchy information 391 may be obtained based on the contents capture function of the second software application 370. For example, execution of the contents capture function may be performed according to a designated period, or according to an occurrence of an event such as a change in a screen of the first software application 360. For example, the change in the screen may be caused based on a user's scroll input to electronic device 101, a preset gesture, or an input to an external electronic device (e.g., a stylus pen, a true wireless stereo (TWS)).

For example, the electronic device 101 may transfer the hierarchy information 391 obtained from the first software application 360 to the second software application 370.

According to an embodiment, the electronic device 101 may extract information for the changed part from the hierarchy information 391 by using the second software application 370. For example, the electronic device 101 may identify identification information of a view area including contents to be translated among at least one view area included in the hierarchy information 391, and information indicating the first software application 360. For example, the electronic device 101 may transfer a request 392 including the identified information to the view framework 381. For example, the request 392 may include the hierarchy information 391. For example, the request 392 may include a request for translation on the framework 380 and reconstruction of view objects, by using the live translation function of the second software application 370.

According to an embodiment, the electronic device 101 may recognize first information of the view area corresponding to the identification information from the hierarchy information 391 by using the identification information of the view area included in the request 392 using the view framework 381. For example, the electronic device 101 may recognize a text in which

translation is required (or a part in which translation is required) in the view area (or the first information of the view area). For example, the electronic device 101 may recognize second information 393 for the text among the first information. For example, the electronic device 101 may transfer the second information 393 from the view framework 381 to the translation framework 382. For example, the first information may include identification information of the user in the view area, an image included in the view area, and the second information 393 for contents (e.g., the text) included in the view area. A specific content regarding this will be described later in FIGS. 5A and 5B.

According to an embodiment, the electronic device 101 may identify a portion of texts of the screen, which are subjects to refrain from (or skip) translating, through the second software application 370 or the view framework 381. For example, the electronic device 101 may not perform translation for the portion of texts in the screen. For example, the portion of the texts excluded from the translation may include identification information of the user of the screen, a uniform resource locator (URL), or a text of some executable objects (e.g., "reply") in the screen. However, the embodiment of the present disclosure is not limited thereto.

According to an embodiment, the electronic device 101 may transfer a request 394 of translation for the text in the second information 393 to the translation model 375 by using the translation framework 382. For example, the request 394 may include the second information 393. For example, the request 394 may include a string of the text of the second information 393. However, the embodiment of the present disclosure is not limited thereto. For example, the request 394 may further include at least one of a color of the text, a size of the text, a shade of the text, a thickness of the text, or font information of the text, along with the string of the text of the second information 393. For example, information provided in the request 394 together with the string of the text of the second information 393 may include information used to apply (or provide) a visual effect of the text. Alternatively, for example, the request 394 may include a language (or a source language) of the text and a language to be translated (or a target language).

In the example of FIG. 2, while displaying the first software application 360, the electronic device 101 may display a screen 211 in which a screen object 212 is popped up based on an input to an executable object 205. As the screen 211 is changed based on the input, the electronic device 101 may obtain hierarchy information for the screen 211 of the first software application 360 through the second software application 370. For example, the hierarchy information may include first information for the view area 213 and second information for a text 214 in the view area 213. The electronic device 101 may transfer the request 392 including the hierarchy information to the view framework 381. The electronic device 101 may recognize the second information for the text 214, which are contents in which translation is required among the first information of the hierarchy information, through the view framework 381. The electronic device 101 may transmit the request 394 including the second information from the view framework 381 to the translation framework 382. The electronic device 101 may recognize a string for the text 214 in the second information through the translation framework 382. Thereafter, the electronic device 101 may transmit the request 394 including the string from the translation framework 382 to the translation model 375.

According to an embodiment, as the electronic device 101 recognizes the second information for the text 214, the electronic device 101 may recognize a first language in which the text 214 is written in the electronic device 101. The electronic device 101 may determine whether to store information (or a language pack) for the first language. For example, in a case that the information for the first language is not stored but may be downloaded, the electronic device 101 may display a visual object for downloading the information for the first language. The electronic device 101 may perform downloading the information for the first language based on an input to the visual object. In a case that the information for the first language is downloaded, the electronic device 101 may perform translation for the text 214 by using the translation model 375.

According to an embodiment, the electronic device 101 may translate the text of the second information 393 included in the request 394 through the translation model 375. For example, the electronic device 101 may translate the text written in the first language into another text 395 written in a second language, which is a language to be translated, through the translation model 375. For example, the second language (or the target language), which is a language to be translated, may be provided from the second software application 370 to the translation model 375. For example, the second software application 370 may recognize a language of a text being inputted (or a language of a currently set keyboard (a keyboard application)) or a language set in a system setting of the electronic device 10,1 as the second language. For example, the first language may be recognized from the second information 393 (or a string of the second information 393) by the translation model 375.

According to an embodiment, the electronic device 101 may reconstruct (or change or update) the second information 393 by using the other text 395. For example, through the view framework 381, the electronic device 101 may reconstruct the hierarchy information 391 (or the first information) by using the second information 393 and third information for the other text 395. For example, the hierarchy information 391 (or the first information) may include the second information 393 and the third information. For example, the electronic device 101 may generate hierarchy information 396 further including the third information through the view framework 381. In other words, the electronic device 101 may generate the hierarchy information 396 including the second information 393 and the third information from the hierarchy information 391 including the second information 393. In an example, the second information 393 included in the hierarchy information 396 may be different from the second information 393 included in the hierarchy information 391. For example, a setting value for changing a visual effect may be changed from the second information 393 included in the hierarchy information 391.

According to an embodiment, the electronic device 101 may transfer the hierarchy information 396 including the third information from the view framework 381 to the first software application 360. Thereafter, the electronic device 101 may display a screen of the first software application 360 changed based on the hierarchy information 396. For example, the first software application 360 may reconstruct the view area to correspond to the third information and display the screen including the reconstructed view area.

FIG. 4 illustrates an example of an operation flow for a method in which an electronic device displays a screen including contents of a first software application according to whether a function for translation of a second software application is activated, according to an embodiment.

At least a part of the method of FIG. 4 may be performed by the electronic device 101 of FIG. 3A. For example, the at least a part of the method may be controlled by a processor 310 of the electronic device 101. In the following embodiment, each operation may be sequentially performed, but is not necessarily performed sequentially. For example, an order of each operation may be changed, and at least two operations may be performed in parallel.

According to an embodiment, in operation 400, the electronic device 101 may execute the first software application. For example, the electronic device 101 may execute the first software application based on obtaining an input of a user to an icon indicating the first software application. In this case, the first software application may be executed on a foreground.

According to an embodiment, while the first software application is being executed, the electronic device 101 may display a screen that is an execution screen of the first software application. For example, the screen may be referred to as a user interface (UI). For example, the screen may be a screen that provides an object executable through interaction (e.g., a touch input) with the user while the first software application is being executed, or provides contents including a visual object (e.g., a text, or an image). For example, the screen may include information for a plurality of areas. For example, the screen may include a first area in which the screen is displayed, one or more second areas included in the first area, one or more third areas included in each of the one or more second areas, and one or more fourth areas included in each of the one or more third areas. For example, the one or more second areas may be defined as areas in which one or more screen objects included in the screen are displayed. For example, each of the one or more screen objects may indicate a screen object displayed (or popped up) based on an input to the screen. For example, the one or more third areas may be defined as areas in which one or more view areas included in one screen object are displayed. For example, the one or more fourth areas may be defined as areas in which one or more texts included in one view area are displayed. For example, the fourth area may include an area in which contents including a text are positioned. However, an embodiment of the present disclosure is not limited thereto. For example, the one or more fourth areas may include contents having an image as well as the text.

According to an embodiment, in operation 405, the electronic device 101 may obtain hierarchy information from the first software application. The electronic device 101 may obtain the hierarchy information by using a contents capture function of the second software application while the second software application is executed in a background. For example, the execution of the contents capture function may be performed according to a designated period, or according to an occurrence of an event such as a change in the screen of the first software application. For example, the hierarchy information may include information for the first area, the second area, the third area, and the fourth area. The hierarchy information may be hierarchy information for a part of a screen displayed on a display area of a display 160 of the electronic device 101 among screens that may be provided by the first software application.

According to an embodiment, in operation 410, the electronic device 101 may determine whether a function of the second software application is activated. For example, the function may be activated through a setting of the electronic device 101, or may be activated based on a specific event. For example, the function of the second software application may indicate a live translation function of obtaining the hierarchy information obtained from the first software application, performing translation of a text part (e.g., a text in the fourth area) recognized through a framework based on the obtained hierarchy information, and reconstructing the hierarchy information by using the translated text.

According to an embodiment, in a case that the first software application is a software application that does not provide a translation function, the electronic device 101 may activate the function of the second software application. For example, the electronic device 101 may set execution of the first software application as a specific event for activating the function of the second software application. Accordingly, as the first software application is executed, the electronic device 101 may activate the function of the second software application. Alternatively, for example, when the first software application is executed, the electronic device 101 may display an icon (or a menu) for activating the function of the second software application through at least a partial area of a display (e.g., the display module 160 of FIG. 1) of the electronic device 101. Based on at least a part of an input to the icon, the electronic device 101 may activate the function of the second software application.

In the example, an example of a case where the first software application does not provide its own translation function in the first software application has been described, but the embodiment of the present disclosure is not limited thereto. For example, even when the first software application provides its own translation function, the electronic device 101 may activate the function of the second software application.

In the operation 410, in a case that the function is activated, the electronic device 101 may perform operation 420. Alternatively, in the operation 410, in a case that the function is deactivated, the electronic device 101 may perform operation 415.

According to an embodiment, in the operation 415, the electronic device 101 may maintain displaying the screen. For example, in a case that the function of the second software application is deactivated, the electronic device 101 may maintain displaying the screen. In other words, the electronic device 101 may display the screen without changing the screen of the first software application.

According to an embodiment, in operation 420, the electronic device 101 may recognize first information and second information. For example, the electronic device 101 may recognize the first information and the second information from the hierarchy information. For example, the electronic device 101 may recognize the first information and the second information through the second software application. For example, in a case that the function of the second software application is activated, the second information for a fourth area including a text to be translated in the hierarchy information, and the first information for a third area including the fourth area may be recognized through the second software application.

According to an embodiment, in operation 425, the electronic device 101 may transfer the first information and the second information to a framework. For example, the electronic device 101 may transfer the first information and the second information recognized through the second software application to the framework. For example, the framework may include a view framework (e.g., the view framework 381 of FIG. 3B) that manages view objects included in the hierarchy information. For example, the view objects may include contents including a screen, a screen object, a view area, and a text (and/or an image).

According to an embodiment, in operation 430, the electronic device 101 may determine whether to include a text written in a language different from a user language. For example, the electronic device 101 may determine whether a text of contents included in the fourth area includes the text written in the language different from the user language based on the second information. For example, the user language, which is a language set by the user, may indicate a target language. For example, as the function is activated, the electronic device 101 may determine whether the text written in the language different from the user language exists among texts included in the screen.

According to an embodiment, the electronic device 101 may identify a portion of texts of the screen, which are subjects to refrain from (or skip) translating, through the second software application or the framework (e.g., the view framework). For example, the electronic device 101 may not perform translation for the portion of texts in the screen. For example, the portion of texts excluded from the translation may include identification information of the user of the screen, a uniform resource locator (URL), or a text of some executable objects (e.g., "reply") in the screen. However, the embodiment of the present disclosure is not limited thereto.

In the operation 430, in a case that the text written in the language different from the user language is included among the texts in the screen, the electronic device 101 may perform operation 435. Alternatively, in the operation 430, in a case that the text written in the language different from the user language is not included among the texts in the screen, the electronic device 101 may perform the operation 415.

According to an embodiment, in the operation 435, the electronic device 101 may execute a model for translation (hereinafter, a translation model). For example, in a case that the text written in the language different from the user language is included among the texts in the screen, the electronic device 101 may transfer a request for translation from a translation framework of the framework to the second software application. For example, the request may include the second information. Alternatively, for example, the request may include a string of a text of the second information.

In response to the request, the electronic device 101 may execute the translation model for translating the text written in the language different from the user language. For example, the translation model may be implemented as a function of the second software application. However, the embodiment of the present disclosure is not limited thereto. For example, the translation model may be installed in a storage space in memory 330 of the electronic device 101. In a case that the translation model is installed in the storage space, the translation model may be executed according to a call of the second software application receiving the request.

According to an embodiment, in operation 440, the electronic device 101 may generate a translated text. For example, the electronic device 101 may transfer information (e.g., the second information) for the text written in the language different from the user language recognized in the framework to the translation model. For example, the electronic device 101 may perform translation for the text in the second information by using the second information through the translation model. For example, the electronic device 101 may generate another text translated into the user language from the text. For example, the electronic device 101 may generate third information for the other text.

According to an embodiment, the electronic device 101 may translate the text in the request through the translation model. For example, the electronic device 101 may translate the text written in the language different from the user language into the other text written in the user language (or the target language) through the translation model. For example, the user language (or the target language) may be provided from the second software application to the translation model. For example, the second software application may recognize a language of a text being inputted or a language set in a system setting of the electronic device 101 as the user language (or the target language).

In the example, an example of a method of performing translation through the translation model is described, but the embodiment of the present disclosure is not limited thereto. For example, without using the translation model, the electronic device 101 may translate the text written in the language different from the user language through an external electronic device (e.g., a server) that provides a translation service.

According to an embodiment, in operation 445, the electronic device 101 may transfer the third information to the framework. The framework may include the translation framework or the view framework. In a case that the framework is the translation framework, the third information may be transferred to the view framework.

According to an embodiment, in operation 450, the electronic device 101 may update the hierarchy information. For example, based on the third information, the electronic device 101 may update (or reconstruct or change) the hierarchy information including the second information to the hierarchy information including the second information and the third information. In other words, the hierarchy information may further include the third information together with the second information.

According to an embodiment, in operation 455, the electronic device 101 may display a changed screen. For example, while the first software application is executed, the electronic device 101 may change (or reconstruct or update) the screen based on the hierarchy information including the third information and the second information, and display the changed screen through a display 320. For example, the changed screen may include the text and the translated other text in a view area of the screen.

The screen based on the hierarchy information including the second information in the operation 405 may include a view area including the text. Alternatively, the changed screen based on the hierarchy information including the second information and the third information in the operation 455 may include a view area including the text and the other text. For example, the view area (or the view area based on the second information) including the text may have a first size. For example, a size of the view area (or the view area based on the second information and the third information) including the text and the other text may be bigger than the first size.

According to an embodiment, the other text of the view area including the text and the other text may have a first visual effect, and the text of the view area including the text and the other text may have a second visual effect. For example, in a case that the first visual effect has a first color, the second visual effect may have a second color having a saturation lower than a saturation of the first color. In this case, unlike the view area including the text and the other text, the text of the view area including the text may have the first visual effect. In other words, the electronic device 101 may apply the first visual effect to the other text in order to increase recognition of the user. In order to change a visual effect of the text from the first visual effect to the second visual effect, the second information of the hierarchy information updated in the operation 450 may be set differently from the second information of the hierarchy information obtained in the operation 405.

FIG. 5A illustrates an example of hierarchy information configuring a screen of a first software application, according to an embodiment. FIG. 5B illustrates an example of first information for a view area of hierarchy information and second information for a text, according to an embodiment.

Referring to FIG. 5A, an example of hierarchy information 500 obtained from the first software application is illustrated. For example, the hierarchy information 500 may include information for view objects included in a screen of the first software application. The hierarchy information 500 may be hierarchy information on a part of a screen displayed on a display area of a display 160 of an electronic device 101 among screens that may be provided by the first software application. For example, the screen of the first software application may be referred to as a user interface (UI). For example, the screen of the first software application may be a screen that provides an object executable through interaction (e.g., a touch input) with a user while the first software application is executed, or provides contents including a visual object (e.g., a text, or an image).

For example, the hierarchy information 500 may include information 510 for a first area, information 521, 522, and 523 for one or more second areas, information 531, 532, and 533 for one or more third areas, and information 540 for one or more fourth areas. The information 531 (or the information 532, the information 533) for the third area may be referred to as the first information 531 (or the first information 532, the first information 533) below. The information 540 for the fourth area may be referred to as the second information 540 below. In FIG. 5A, an example of a case where one first area includes three second areas, one second area among the three second areas includes three third areas, and one third area includes one fourth area is described, but an embodiment of the present disclosure is not limited thereto. The number of second areas included in one first area, the number of third areas included in one second area, and the number of fourth areas included in one third area may be changed.

For example, the first area may indicate an area in which the screen (e.g., the screen 211 of FIG. 2) is displayed. For example, the second area may indicate an area in which a screen object (e.g., the screen object 212 of FIG. 2) included in the screen is displayed. For example, the third area may indicate an area in which a view area (e.g., the view area 213 of FIG. 2) included in the screen object is displayed. For example, the fourth area may indicate an area in which contents (e.g., the text 214 of FIG. 2) included in the view area is displayed. For example, the contents may include at least one of a text or an image.

According to an embodiment, the first information 531 for the third area may include identification information 542 of the user in the view area, an image 541 included in the view area, and second information 540 for the fourth area included in the third area. For example, the identification information 542 may be the identification information 222 in the view area 213 of FIG. 2. For example, the image 541 may be the image 221 in the view area 213 of FIG. 2.

Referring to FIG. 5A, the hierarchy information 500 may include a hierarchical state of the view objects (e.g., the screen, the screen object, the view area, and the contents) included in the screen, and the number of the view objects. A specific content regarding this will be described in FIG. 5B below.

FIG. 5B illustrates an example 550 of the first information 531 for the third area and the second information 540 for the fourth area included in the third area. Parameters included in each of the first information 531 and the second information 540 illustrated in the example 550 are only exemplary, and the embodiment of the present disclosure is not limited thereto. For example, the first information 531 may be referred to as a view. For example, the second information 540 may be referred to as a text view. However, the embodiment of the present disclosure is not limited thereto. For example, in a case that contents of the second information 540 includes an image, the second information 540 may be referred to as an image view.

According to an embodiment, the first information 531 may include an identifier 551 of a view area, coordinates 552 and 553 indicating a position of the view area, and length values 554 and 555 indicating a size of the view area. For example, the identifier 551 may indicate information for distinguishing between the plurality of view areas included in the second area (or one screen object) including the third area. For example, the coordinates 552 and 553 may indicate the position of the view area when a designated position on a screen is assumed to be the origin (0, 0). For example, the designated position may be a specific point (e.g., an upper left vertex) of the screen. For example, the position of the view area indicated by the coordinates 552 and 553 may be a designated position of the view area. For example, the coordinates 552 may indicate an x coordinate, and the coordinates 553 may indicate a y coordinate. For example, the designated position of the view area may be a center point of the view area. For example, in a case that the second information 540 is changed or new information (e.g., a text view a for translated text) is added, the coordinates 552 and 553 may change according to a designated rule. For example, the length values 554 and 555 may indicate the size of the view area. For example, the length value 554 may indicate a width (or a horizontal length) of the view area. For example, the length value 555 may indicate a height (or a vertical length) of the view area. However, the embodiment of the present disclosure is not limited thereto. For example, the first information 531 may include information indicating a design of the view area.

According to an embodiment, the second information 540 may include a string 561 of a text included in the view area, a color 562 of the text, and a size 563 of the text. However, the embodiment of the present disclosure is not limited thereto. For example, the second information 540 may include a shade, a size, a thickness, or a font (or a typeface) of the text included in the view area. In addition, in FIG. 5B, the example 550 of a case where contents included in the view area is a text is illustrated, but the embodiment of the present disclosure is not limited thereto. For example, in a case that contents included in the view area is an image, the second information 540 may include information (e.g., the image, or a size of the image) for the image included in the view area.

FIG. 6 illustrates an example of an operation flow for a method of activating a function for translation of a second software application, according to an embodiment.

At least a part of the method of FIG. 6 may be performed by the electronic device 101 of FIG. 3A. For example, the at least a part of the method may be controlled by a processor 310 of the electronic device 101. In the following embodiment, each operation may be sequentially performed, but is not necessarily performed sequentially. For example, an order of each operation may be changed, and at least two operations may be performed in parallel.

The method of FIG. 6 illustrates an example of operations performed in the operation 410 of FIG. 4. For example, operation 600, operation 605, and operation 610 may be performed in the operation 410.

According to an embodiment, in the operation 600, the electronic device 101 may determine whether the function (or a live translation function) of the second software application is activated based on a system setting. For example, the system setting may include an application capable of performing an overall setting of the electronic device 101. For example, the electronic device 101 may determine whether it is a state in which the function of the second software application in a menu for a keyboard application of the system setting is activated.

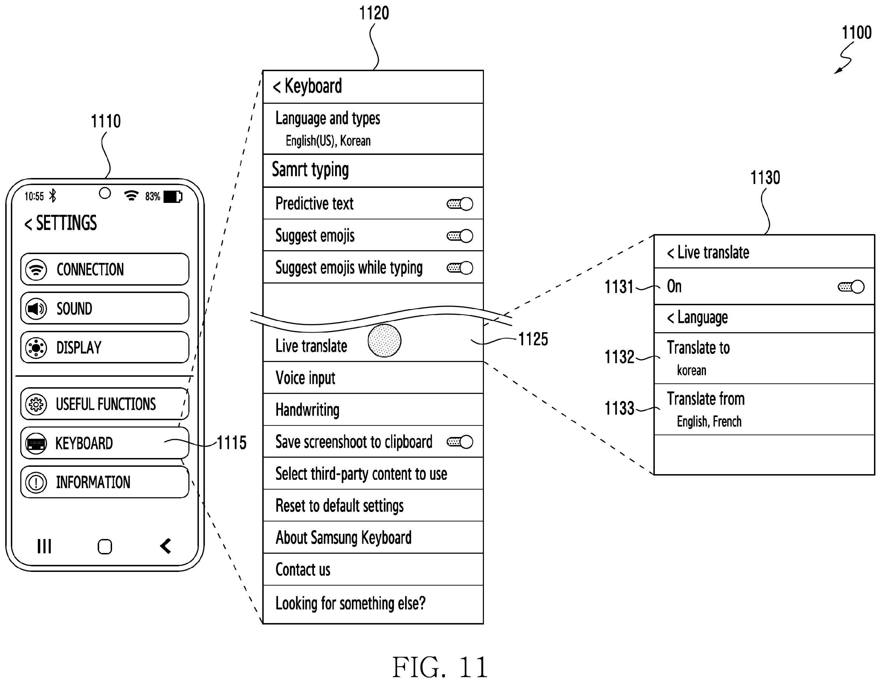

According to an embodiment, the system setting may include the menu for the keyboard application. For example, the menu may include a sub menu for activating the function of the second software application. For example, the system setting may include a plurality of menus. Among the plurality of menus, the menu for the keyboard application may include a plurality of sub menus including the sub menu associated with the second software application. For example, the sub menu associated with the second software application may include an icon for activating the function of the second software application and icons for setting languages (e.g., a source language, and a target language) to be used within the function. An example of the system setting, the menu, and the sub menu will be illustrated in FIG. 11 below.

In the operation 600, in a case that the function of the second software application is activated, the electronic device 101 may perform the operation 610. In contrast, in the operation 600, in a case that the function of the second software application is deactivated, the electronic device 101 may perform the operation 605.

According to an embodiment, in the operation 605, the electronic device 101 may determine whether an event for activating the function of the second software application has occurred. For example, in a case of obtaining an input to an icon for a function (hereinafter, a keyboard translation function) for translation of a text that is being written by using a software application (e.g., the keyboard application), the electronic device 101 may activate the function of the second software application. For example, the event may include obtaining of an input to the icon included in an executable object having a keyboard shape provided through the keyboard application and for translation of a text displayed in a bar-shaped visual object in the executable object. For example, the bar-shaped visual object may indicate a part where a text written by a user is displayed based on at least a part of the input to the executable object. However, an embodiment of the present disclosure is not limited thereto. For example, the electronic device 101 may activate the function of the second software application according to the event obtaining a designated gesture or a designated input. For example, the designated gesture may include a movement (e.g., a pupil, or a hand) of the user obtained through a camera (e.g., the camera module 180 of FIG. 1) of the electronic device 101 or a movement of an external electronic device (e.g., a stylus pen) connected to the electronic device 101. For example, the designated input may include a touch input (e.g., a long press, a double touch, an input to a popped-up button) of the user and a touch input to the external electronic device (e.g., the stylus pen) connected to the electronic device 101.

In the operation 605, in a case that the event for activating the function of the second software application has occurred, the electronic device 101 may perform the operation 610. Alternatively, in a case that the event for activating the function of the second software application does not occur in the operation 605, the electronic device 101 may perform the operation 600 again.

According to an embodiment, in the operation 610, the electronic device 101 may detect a translation target. For example, in a case that the function of the second software application is activated, the electronic device 101 may detect the translation target (e.g., contents having a text in the fourth area) in hierarchy information obtained from a first software application. Accordingly, the electronic device 101 may recognize second information for the contents in the hierarchy information and first information for a view area in which the contents are displayed.

Referring to FIG. 6, the function of the second software application being activated based on at least a part of the input to the system setting may be understood as an automatic event for activating the function of the second software application occurring. In addition, the function of the second software application being activated based on the designated gesture or the designated input may be understood as a manual event for activating the function of the second software application occurring. In the example of FIG. 6, it is illustrated that whether the automatic event is detected is determined first, and whether the manual event is detected is determined, but the embodiment of the present disclosure is not limited thereto.

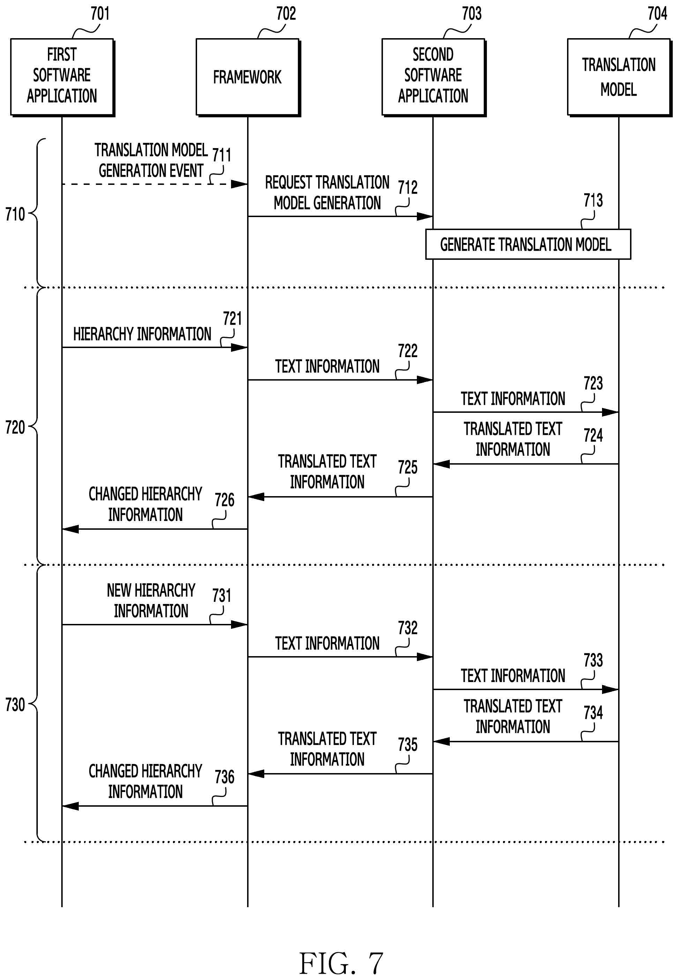

FIG. 7 illustrates an example of a signal flow for a method of generating a translation model and providing a translation function by using the generated translation model, according to an embodiment.

A first software application 701 of FIG. 7 may be an example of the first software application 331a of FIG. 3A and the first software application 360 of FIG. 3B. A framework 702 of FIG. 7 may be included in the framework layer 332 of FIG. 3A, and may be an example of the framework 380 of FIG. 3B. A second software application 703 of FIG. 7 may be an example of the second software application 331b of FIG. 3A and the second software application 370 of FIG. 3B. The first software application 701, the framework 702, the second software application 703, and a translation model 704 may be included in an electronic device 101.

FIG. 7 illustrates an example 710 for a method of generating the translation model 704, an example 720 for a method of performing translation of a screen, and an example 730 for a method of performing translation of a changed screen. For convenience of explanation, in FIG. 7, the examples 710, 720, and 730 of generating a translation model, performing translation of a screen as a function is activated, and performing translation of a changed screen in a case that the screen is changed in a state in which the function is activated, are illustrated, but an embodiment of the present disclosure is not limited thereto. For example, only a part of the examples 710, 720, and 730 of FIG. 7 may be performed. In addition, in FIG. 7, a method of using the translation model 704 is illustrated, but the embodiment of the present disclosure is not limited thereto. For example, in a case that a server providing a translation service is used instead of the translation model 704, communication with the server may be performed instead of the translation model 704, and the example 710 of operations of generating the translation model 704 may be omitted.

Referring to the example 710, in operation 711, the electronic device 101 may transmit a translation model generation event from the first software application 701 to the framework 702. For example, the translation model generation event may include an event for activating the function of the second software application. However, the operation 711 may be omitted. For example, the electronic device 101 may generate the translation model 704 when the second software application is initially executed (or downloaded) regardless of the translation model generation event.

According to an embodiment, in operation 712, the electronic device 101 may request translation model generation from the framework 702 to the second software application 703. For example, a translation framework of the framework 702 may request the translation model generation in response to the translation model generation event.

According to an embodiment, in operation 713, the electronic device 101 may generate the translation model 704 through the second software application 703. For example, the electronic device 101 may generate the translation model 704 according to the request for generating the translation model.

Although not illustrated in the example 710, the translation model 704 may transmit a response to notify the second software application 703 that the translation model 704 has been generated in a background. In addition, the second software application 703 may transfer the response to the framework 702.

Referring to the example 720, in operation 721, the electronic device 101 may transmit hierarchy information from the first software application 701 to the framework 702. In this case, the hierarchy information may be hierarchy information for a part of a screen displayed on a display area of a display 160 of the electronic device 101 among screens that may be provided by the first software application 701. Although not illustrated in FIG. 7, the hierarchy information may be transferred from the first software application 701 to the framework 702 through the second software application 703.

According to an embodiment, in operation 722, the electronic device 101 may transfer text information from the framework 702 to the second software application 703. For example, the text information may include second information of the hierarchy information. Alternatively, for example, the text information may include a string indicating a text in the second information. According to an embodiment, in operation 723, the electronic device 101 may transfer the text information from the second software application 703 to the translation model 704.

According to an embodiment, the translation model 704 may perform translation for a text of the text information. Accordingly, the translation model 704 may generate a translated text.

According to an embodiment, in operation 724, the electronic device 101 may transfer translated text information from the translation model 704 to the second software application 703. For example, the translated text information may be referred to as third information. According to an embodiment, in operation 725, the electronic device 101 may transfer the translated text information from the second software application 703 to the framework 702.

According to an embodiment, the framework 702 may reconstruct (or change or update) the hierarchy information by using the translated text information. For example, the electronic device 101 may generate the hierarchy information further including the translated text information on the framework 702. The hierarchy information further including the translated text information may be referred to as changed hierarchy information.

According to an embodiment, in operation 726, the electronic device 101 may transfer the changed hierarchy information from the framework 702 to the first software application 701. For example, the electronic device 101 may change (or reconstruct or update) a screen from the changed hierarchy information by using the first software application 701. Thereafter, the electronic device 101 may display the changed screen while the first software application 701 is executed on a foreground.

Referring to the example 730, in operation 731, the electronic device 101 may transmit new hierarchy information from the first software application 701 to the framework 702. In this case, the new hierarchy information may be hierarchy information for a part in which the screen of the hierarchy information transmitted in the operation 721 is displayed on the display area of the electronic device 101 among an updated screen of the first software application 701 based on an input. For example, contents included in the updated screen in the operation 731 may at least partially superimposed on contents included in the screen in the operation 721. Alternatively, for example, the contents included in the updated screen in the operation 731 may be different from the contents included in the screen in the operation 721. Hereinafter, the new hierarchy information may be referred to as the hierarchy information. Although not illustrated in FIG. 7, the new hierarchy information may be transferred from the first software application 701 to the framework 702 through the second software application 703.

According to an embodiment, in operation 732, the electronic device 101 may transfer text information from the framework 702 to the second software application 703. For example, the text information may include second information of the hierarchy information. Alternatively, for example, the text information may include a string indicating a text in the second information. According to an embodiment, in operation 733, the electronic device 101 may transfer the text information from the second software application 703 to the translation model 704.

According to an embodiment, the translation model 704 may perform translation for the text of the text information. Accordingly, the translation model 704 may generate a translated text.

According to an embodiment, in operation 734, the electronic device 101 may transfer translated text information from the translation model 704 to the second software application 703. For example, the translated text information may be referred to as third information. According to an embodiment, in operation 735, the electronic device 101 may transfer the translated text information from the second software application 703 to the framework 702.

According to an embodiment, the framework 702 may reconstruct (or change or update) the hierarchy information by using the translated text information. The hierarchy information to be reconstructed may be the new hierarchy information transmitted in the operation 731. For example, the electronic device 101 may generate the hierarchy information further including the translated text information on the framework 702. The hierarchy information further including the translated text information may be referred to as changed hierarchy information.

According to an embodiment, in operation 736, the electronic device 101 may transfer the changed hierarchy information from the framework 702 to the first software application 701. For example, the electronic device 101 may change (or reconstruct or update) a screen from the changed hierarchy information by using the first software application 701. Thereafter, the electronic device 101 may display the changed screen while the first software application 701 is executed on the foreground.

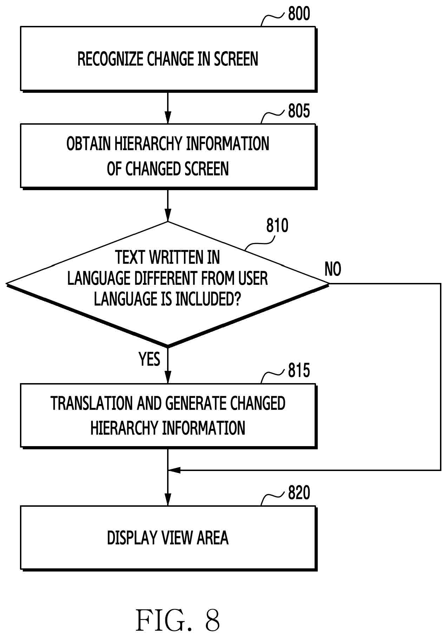

FIG. 8 illustrates an example of an operation flow for a method of providing a translation function according to whether a screen is changed, according to an embodiment.

At least a part of the method of FIG. 8 may be performed by the electronic device 101 of FIG. 3A. For example, the at least a part of the method may be controlled by a processor 310 of the electronic device 101. In the following embodiment, each operation may be sequentially performed, but is not necessarily performed sequentially. For example, an order of each operation may be changed, and at least two operations may be performed in parallel.

The method of FIG. 8 may include an example of operations performed in a case that a change occurs on a screen based on an input of a use after or while the operation 455 of FIG. 4 is performed. In this case, it is assumed that a function of a second software application is activated.

According to an embodiment, in operation 800, the electronic device 101 may recognize a change in a screen. For example, the electronic device 101 may change the screen based on an input of the user while displaying the screen further including a translated text. For example, the user may include an input to an executable object in the screen or a scroll input. However, an embodiment of the present disclosure is not limited thereto.

According to an embodiment, in operation 805, the electronic device 101 may obtain hierarchy information of a changed screen. For example, the electronic device 101 may obtain the hierarchy information of the changed screen based on the input from the first software application. For example, the hierarchy information may be hierarchy information for the changed screen displayed on a display area of a display 160 of the electronic device 101 among screens that may be provided by the first software application.

According to an embodiment, the electronic device 101 may recognize, from the hierarchy information, second information for a fourth area including a text to be translated in the hierarchy information and first information for a third area including the fourth area.

According to an embodiment, in operation 810, the electronic device 101 may determine whether to include a text written in a language different from a user language. For example, the electronic device 101 may determine whether a text of contents included in the fourth area includes the text written in the language different from the user language based on the second information. For example, the user language, which is a language set by the user, may indicate a target language. For example, the electronic device 101 may determine whether the text written in the language different from the user language among texts included in the changed screen exists as the function is activated.

In operation 810, in a case of including the text written in the language different from the user language among the texts in the changed screen, the electronic device 101 may perform operation 815. Alternatively, in operation 810, in a case of not including the text written in the language different from the user language among the texts in the changed screen, the electronic device 101 may perform operation 820.

According to an embodiment, in the operation 815, the electronic device 101 may perform translation and generate changed hierarchy information. For example, the electronic device 101 may perform translation for the text written in the language different from the user language. For example, the electronic device 101 may perform the translation by using information (e.g., second information) for the text. For example, the electronic device 101 may generate the changed hierarchy information based on information (e.g., third information) for a translated text. For example, the changed hierarchy information may include information (e.g., first information) for a view area including the text and the translated text.

According to an embodiment, in the operation 820, the electronic device 101 may display the view area.

For example, in a case of including the text written in the language different from the user language among the texts in the changed screen, the electronic device 101 may display the changed screen including the view area. In this case, the view area may include contents having the text and the translated text.

Alternatively, in a case of not including the text written in the language different from the user language among the texts in the changed screen, the electronic device 101 may display the changed screen including the view area. In this case, the view area may include contents having the text. In other words, since translation is not required for the texts in the changed screen, the changed screen including an untranslated view area may be displayed.

FIGS. 9A to 9D illustrate an example of a method of translating a text included in a screen and displaying the screen including the translated text, according to an embodiment.

FIG. 9A illustrates an example of a method of displaying a screen including view areas 910b and 920b including a text written in a first language and another text written in a second language in a screen 905 of a first software application that provides a messenger service.

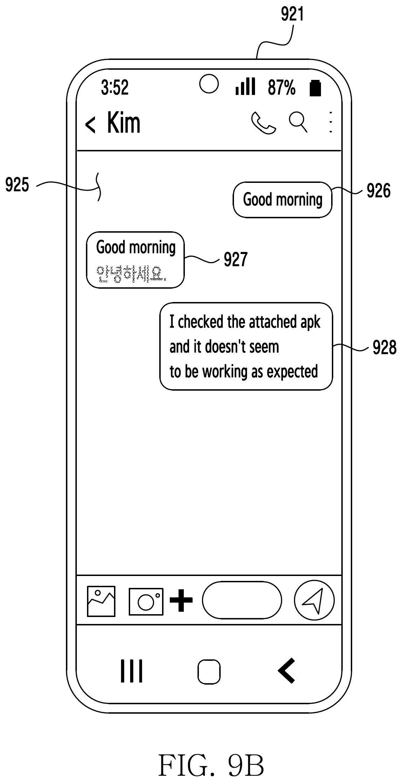

Referring to FIG. 9A, an electronic device 101 may display a screen 905a in response to at least a part of an input to an icon (not illustrated) for the first software application. In the example of FIG. 9A, a case where the screen 905a is a chatting screen between a user (e.g., Kim of FIG. 9B) of the electronic device 101and a specific user (e.g., Linsey Smith), and the screen 905a has a structure of view objects that are substantially the same as a screen object, is illustrated, but an embodiment of the present disclosure is not limited thereto. This may be changed according to a method of configuring the view objects according to the first software application.

According to an embodiment, as a live translation function (or a function) of a second software application is activated, the electronic device 101 may obtain hierarchy information of the screen 905a from the first software application. For example, the hierarchy information of the screen 905a may include first information (e.g., the first information 531 of FIG. 5B) for each of a plurality of view areas 910a, 915a, and 920a. For example, the view area 910a may include contents having a text (e.g., "Good morning") written in the first language (e.g., English). In addition, for example, the view area 915a may include contents having a text (e.g., " 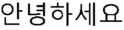 ") written in the second language (e.g., Korean). In addition, for example, the view area 920a may include a text (e.g., "I checked the attached apk and it doesn't seem to be working as expected.") written in the first language (e.g., English). For example, the view area 910a and the view area 920a may display a message transmitted from the specific user (e.g., Linsey Smith) to the user (e.g., Kim) of the electronic device 101. For example, the view area 915a may display a message transmitted from the user (e.g., Kim) of the electronic device 101 to the specific user (e.g., Linsey Smith).

For example, first information (e.g., the first information 531 of FIG. 5B) for the view area 910a may include second information (e.g., the second information 540 of FIG. 5B) for the text (e.g., "Good morning") written in the first language (e.g., English). For example, first information for the view area 915a may include second information for the text (e.g., " 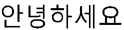 ") written in the second language (e.g., Korean). For example, first information for the view area 920a may include second information for the text (e.g., "I checked the attached apk and it doesn't seem to be working as expected.") written in the first language (e.g., English).

According to an embodiment, in a case that the function of the second software application is activated, the electronic device 101 may translate a text written in the first language and generate another translated text. For example, the electronic device 101 may generate the text (e.g., " 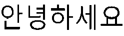 ") written in the second language (e.g., Korean) from the text (e.g., "Good morning") written in the first language (e.g., English). In addition, the electronic device 101 may generate a text (e.g., " 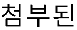 apk 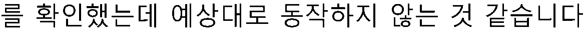 .") written in the second language (e.g., Korean) from the text (e.g., "I checked the attached apk and it doesn't seem to be working as expected.") written in the first language (e.g., English). For example, even if the function of the second software application is activated, the electronic device 101 may skip (or refrain from) translating the text (e.g., " 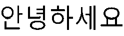 ") of the view area 915a. For example, based on recognizing that the text of the view area 915a is written in the second language (e.g., Korean), the electronic device 101 may exclude it from a translation target.

According to an embodiment, the electronic device 101 may reconstruct (or change or update) the hierarchy information of the screen 905a by using a text translated on a framework (e.g., the framework 380 of FIG. 3B). For example, the electronic device 101 may reconstruct the hierarchy information of the screen 905a. The reconstructed hierarchy information of the screen 905a may further include the second information, and third information for the translated text.

According to an embodiment, the electronic device 101 may display a screen 905b changed through the first software application by using the reconstructed hierarchy information. For example, the changed screen 905b may include the view areas 910b and 920b changed by using the reconstructed hierarchy information. For example, the view area 910b may include the text (e.g., "Good morning") written in the first language (e.g., English) and the text (e.g., " 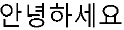 ") written in the second language (e.g., Korean). In addition, the view area 920b may include the text (e.g., "I checked the attached apk and it doesn't seem to be working as expected.") written in the first language (e.g., English) and the text (e.g., " 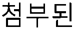 apk 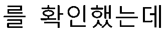 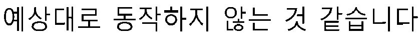 .") written in the second language (e.g., Korean). In addition, for example, the changed screen 905b may include a view area 915b. For example, the view area 915b of the changed screen 905b may substantially correspond to the view area 915a of the screen 905a.

According to an embodiment, sizes of the view areas 910b and 920b may be different from sizes of the view areas 910a and 920a. For example, the size of the view area 910b may be bigger than the size of the view area 910a. For example, the size of the view area 920b may be bigger than the size of the view area 920a. In this case, widths of the view areas 910b and 920b may be substantially the same as widths of the view areas 910a and 920a. In other words, the electronic device 101 may change a size of view areas to include more contents while maintaining a disposition state (or a layout) of the view areas.

According to an embodiment, texts included in the view areas 910b and 920b may have different visual effects from each other. For example, the text (e.g., "Good morning") written in the first language (e.g., English) of the view area 910b may have a first visual effect. For example, the text (e.g., " 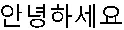 ") written in the second language (e.g., Korean) of the view area 910b may have a second visual effect. For example, in a case that the first visual effect have a first color, the second visual effect may have a second color having a saturation lower than a saturation of the first color.

In the example, an example of changing a visual effect of the text (e.g., "Good morning") from the second visual effect to the first visual effect by displaying the translated text (e.g., " 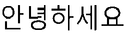 ") of the view area 910b, is illustrated, but the embodiment of the present disclosure is not limited thereto. For example, the visual effect of the text (e.g., "Good morning") of the view area 910a and the view area 910b may have the first visual effect, and a third visual effect, which has a third color having a saturation higher than the first visual effect, may be applied to the translated text (e.g., " 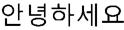 ") of the view area 910b.

FIG. 9B illustrates an example of a method of displaying a screen including a view area 927 including a text written in a first language and another text written in a second language in a screen 925 of a first software application that provides a messenger service.

Referring to FIG. 9B, an electronic device 921 may display the screen 925 in response to at least a part of an input to an icon (not illustrated) for the first software application. In the example of FIG. 9B, the screen 925 is a chatting screen between a specific user (e.g., Linsey Smith of FIG. 9A) of the electronic device 921 and a user (e.g., Kim) of the electronic device 101, and the screen 925 has a structure of view objects that are substantially the same as a screen object, but an embodiment of the present disclosure is not limited thereto. This may be changed according to a method of configuring the view objects according to the first software application.

According to an embodiment, as a live translation function (or the function) of the second software application is activated, the electronic device 921 may display the screen 925 including the view area 927 including a translated text. For example, the screen 925 may include a view area 926 including a text (e.g., "Good morning") written in the first language (e.g., English) and a view area 928 including a text (e.g., "I checked the attached apk and it doesn't seem to be working as expected.") written in the first language (e.g., English). In addition, for example, the screen 925 may include a view area 927 including the text (e.g., "Good morning") written in the first language (e.g., English) and a text (e.g., " 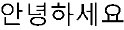 ") translated into the second language (e.g., Korean). For example, the view area 926 and the view area 928 may display a message transmitted from the specific user (e.g., Linsey Smith) of the electronic device 921 to the user (e.g., Kim) of the electronic device 101. For example, the view area 927 may display a message transmitted from the user (e.g., Kim) of the electronic device 101 to the specific user (e.g., Linsey Smith) of the electronic device 921.

Referring to the above, in a case that the function of the second software application is activated, the electronic device 921 may recognize the text (e.g., " 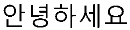 ") of the view area 927 written in Korean, which is a source language, generate a text (e.g., "Good morning") translated into English, which is a target language, and then display the view area 927. For example, the screen 925 may include the reconstructed view area 927. In other words, the screen 925 may indicate a reconstructed screen.

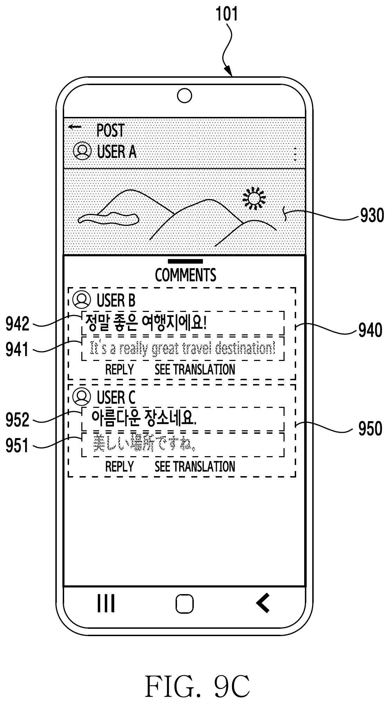

FIG. 9C illustrates an example of a method of displaying a screen including view areas including a text translated from texts written in a plurality of languages.

Referring to FIG. 9C, the electronic device 101 may display a screen 930 of a first software application, which is an SNS software application. FIG. 9C illustrates a case where the first software application is the SNS software application, but an embodiment of the present disclosure is not limited thereto.

According to an embodiment, the screen 930 may include a plurality of view areas 940 and 950. For example, the view areas 940 and 950 may include a text before translation and a translated text as the function of the second software application is activated. For example, the view area 940 may include a text ("It's a really great travel destination!") 941 written in a first language (e.g., English) and a text (" 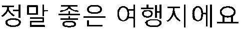 !") 942 written in a second language (e.g., Korean). For example, the text 941 may be a text before translation. For example, the text 942 may be a translated text. In addition, for example, the view area 950 may include a text (" 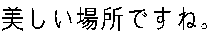 ") 951 written in a first language (e.g., Japanese) and a text (" 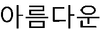 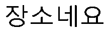 .", "It's a beautiful place.") 952 written in a second language (e.g., Korean). For example, the text 951 may be a text before translation. For example, the text 952 may be a translated text.

According to an embodiment, texts included in the view areas 940 and 950 may have different visual effects from each other. For example, the text 941 of the view area 940 may have a first visual effect. For example, the text 942 of the view area 940 may have a second visual effect. For example, in a case that the first visual effect has a first color, the second visual effect may have a second color having a saturation lower than a saturation of the first color.

Referring to the above, the electronic device 101 may translate texts written in different source languages into texts written in the same target language by using the function of the second software application. The electronic device 101 may provide a translated text by using the function of the second software application without executing a separate translation function provided by the first software application.

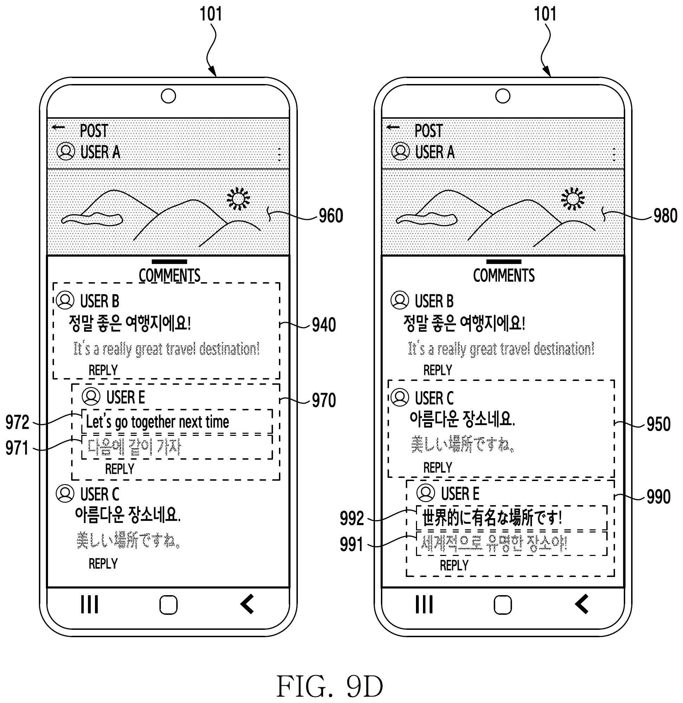

FIG. 9D illustrates an example of screens including a view area including a text translated into a target language determined based on a relevance between the view areas.

Referring to FIG. 9D, the electronic device 101 may display a screen 960 of a first software application, which is an SNS software application. In FIG. 9D, a case where the first software application is the SNS software application is illustrated, but an embodiment of the present disclosure is not limited thereto.

According to an embodiment, the screen 960 may include a plurality of view areas 940 and 970. For example, the view areas 940 and 970 may include a text before translation and a translated text as the live translation function (or the function) of the second software application is activated. For example, the view area 940 may include the text ("It's a really great travel destination!") 941 written in a first language (e.g., English) and the text (" 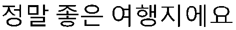 !") 942 written in a second language (e.g., Korean). For example, the text 941 may be a text before translation. For example, the text 942 may be the translated text. In addition, for example, the view area 970 may include a text (" 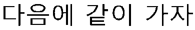 .") 971 written in a first language (e.g., Korean) and a text ("Let's go together next time") 972 written in a second language (e.g., English). For example, the text 971 may be a text before translation. For example, the text 972 may be a translated text.

According to an embodiment, the view area 970 may be a dependent view area generated for the view area 940. For example, identification information (e.g., the identification information 551 of FIG. 5B) of the view area 940 may be linked to identification information of the view area 970. Linked between identification information may include having the same identification information or the identification information being set according to a predetermined rule. For example, in a case that the view area 940 is an area in which a comment on SNS is displayed, the view area 970 may be an area in which a reply to the comment on SNS is displayed.

According to an embodiment, the electronic device 101 may recognize a relevance (e.g., link) between the view areas 940 and 970 while performing translation by using the function of the second software application. For example, the electronic device 101 may determine a target language of the text 972 to be translated from the text 971 of the view area 970 based on the relevance. For example, the target language of the text 972 may be determined as the first language (e.g., English) of the view area 940 linked to the view area 970.

In addition, according to an embodiment, a screen 980 may include a plurality of view areas 950 and 990. For example, the view areas 950 and 990 may include a text before translation and a translated text as the function of the second software application is activated. For example, the view area 950 may include the text (" 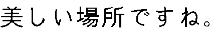 ") 951 written in a first language (e.g., Japanese) and the text ("" 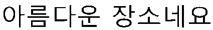 .") 952 written in a second language (e.g., Korean). For example, the text 951 may be a text before translation. For example, the text 952 may be a translated text. In addition, for example, the view area 990 may include a text (" 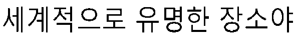 !", "It's a place famous around the world!") 991 written in a first language (e.g., Korean) and a text (" 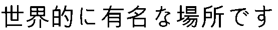 ! ") 992 written in a second language (e.g., Japanese). For example, the text 991 may be a text before translation. For example, text 992 may be a translated text.

According to an embodiment, the view area 990 may be a dependent view area generated for the view area 950. For example, identification information (e.g., the identification information 551 of FIG. 5B) of the view area 950 may be linked to identification information of the view area 990. Linked between identification information may include having the same identification information or the identification information being set according to a predetermined rule. For example, in a case that the view area 950 is an area in which a comment on SNS is displayed, the view area 990 may be an area in which a reply to the comment on SNS is displayed.

According to an embodiment, the electronic device 101 may recognize a relevance (e.g., link) between the view areas 950 and 990 while performing translation by using the function of the second software application. For example, the electronic device 101 may determine a target language of the text 992 to be translated from the text 991 of the view area 990 based on the relevance. For example, the target language of the text 992 may be determined as the first language (e.g., Japanese) of the view area 950 linked to the view area 990.

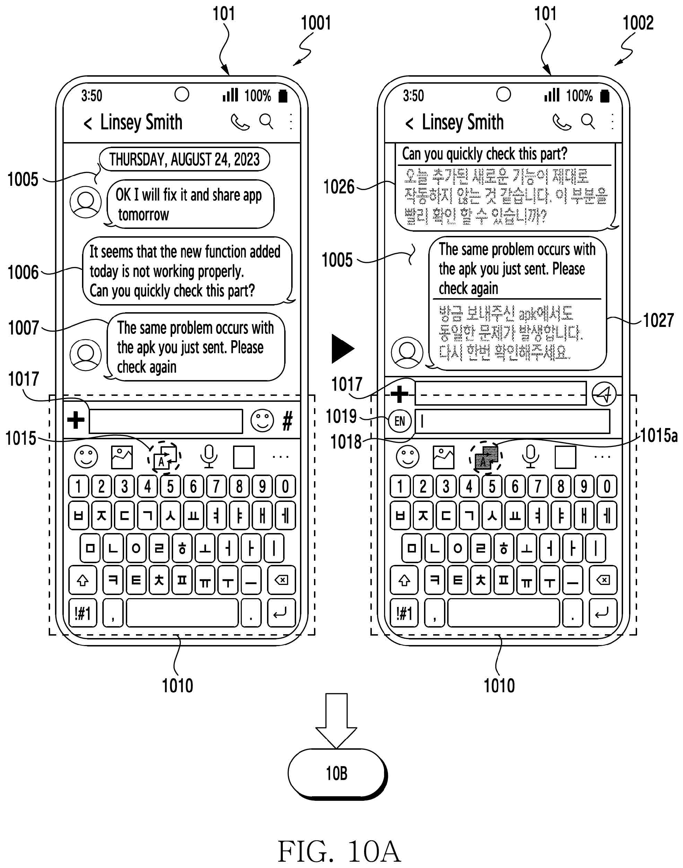

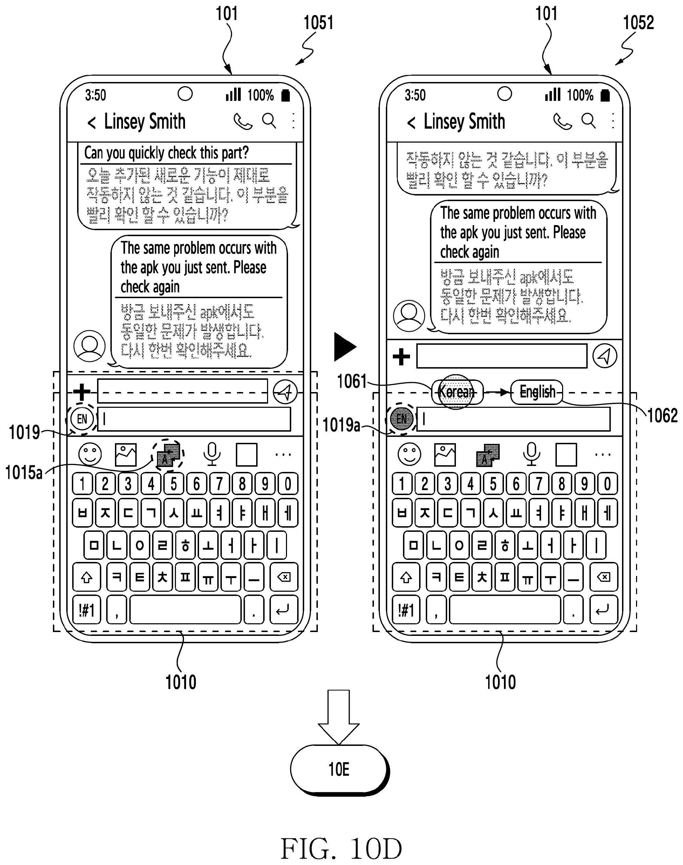

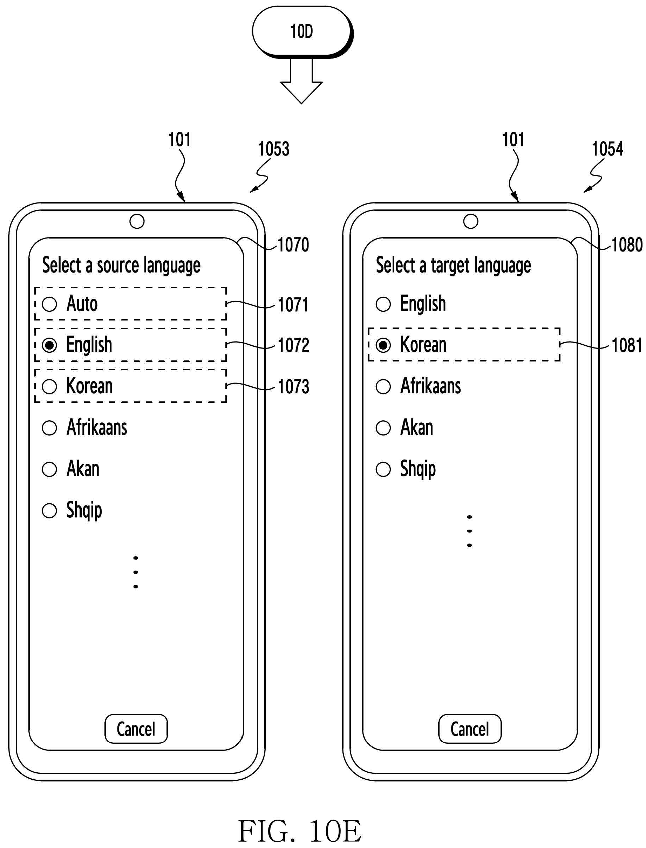

FIGS. 10A to 10C illustrate an example of a method of activating a function of a second software application based on an input to an icon of a keyboard application, according to an embodiment. FIGS. 10D and 10E illustrate an example of a method of changing a setting of a second software application through a change in a setting of a keyboard application, according to an embodiment.

FIGS. 10A to 10C illustrate examples 1001, 1002, 1003, and 1004 of a method of activating the function of the second software application based on an electronic device 101 obtaining an input to an icon in an executable object of the keyboard application while a first software application that provides a messenger service is executed on a foreground. For example, the electronic device 101 of FIGS. 10A to 10C may be an example of the electronic device 101 of FIG. 3A.

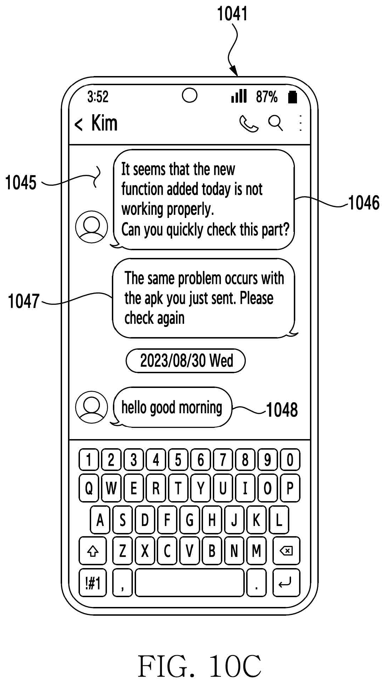

Referring to FIGS. 10A to 10C, in the example 1001, the electronic device 101 may display a screen 1005 while the first software application is executed on the foreground. For example, the screen 1005 may include a screen indicating chatting between a user (e.g., Kim of FIG. 10C) of the electronic device 101 and another user (e.g., Linsey Smith) through the first software application. For example, the screen 1005 may include a plurality of view areas 1006 and 1007. For example, the view area 1006 may include a text (e.g., "It seems that the new function added today is not working properly. Can you quickly check this part?") written in a first language (e.g., English). For example, the view area 1007 may include a text ("The same problem occurs with the apk you just sent. Please check again.") written in the first language (e.g., English).

In the example 1001, the electronic device 101 may display an executable object 1010 of the keyboard application. For example, the executable object 1010 may include a keyboard-shaped object provided through the keyboard application. For example, the executable object 1010 may be at least partially superimposed on the screen 1005.

In FIGS. 10A to 10C, a case where the electronic device 101 is a bar-type smartphone is illustrated, but an embodiment of the present disclosure is not limited thereto. For example, the electronic device 101 may include an electronic device (e.g., a foldable electronic device or a rollable electronic device) including a flexible display. Accordingly, the executable object 1010 may be displayed across a screen of the flexible display. It is assumed that the flexible display includes a first display area, a second display area, and a third display area (or a bending area) configured to be bent between the first display area and the second display area. For example, the executable object 1010 of the screen 1005 may be displayed in the second display area. For example, a remaining part (e.g., a part including a chatting content) of the screen 1005 that is different from the executable object 1010 may be displayed from the third display area across the first display area.

According to an embodiment, the executable object 1010 may include an icon 1015 for a keyboard translation function and an input area 1017 for displaying a translated text being inputted. For example, the icon 1015 may indicate an icon for activating a function for translation of a text being written by the keyboard application. In example 1001, the icon 1015 may be in an inactive state. For example, the input area 1017 may indicate an area (or a visual object) for displaying the translated text based on at least a part of an input to the executable object 1010. For example, the input area 1017 may include a bar-shaped visual object. However, the present disclosure is not limited thereto.

In the example 1002, according to an embodiment, the electronic device 101 may activate the icon 1015. For example, the electronic device 101 may display an icon 1015a activated based on an input to the icon 1015. Compared with the icon 1015, a color, a shade, a font, or a background image of the activated icon 1015a may be changed. For example, the activated icon 1015a may be displayed in a color different from a color of the icon 1015.

For example, by displaying the icon 1015a, the electronic device 101 may display the executable object 1010 further including an input area 1018 in which a text to be translated (or a text being inputted) may be displayed. For example, the input area 1018 may indicate an area (or a visual object) for displaying a text being written based on at least a part of an input to the executable object 1010. For example, by displaying the icon 1015a, the electronic device 101 may display an icon 1019 for changing a language (or a target language) to be translated together with the input area 1018. For example, an image (or a shape) in the icon 1019 may be changed according to the target language. For example, the image of the icon 1019 may include an alphabet (e.g., "EN") since the target language is English. However, the embodiment of the present disclosure is not limited thereto. For example, when the target language is Chinese, the image of the icon 1019 may include Chinese characters.

According to an embodiment, the electronic device 101 may activate the function of the second software application based on the input to the icon 1015. For example, the electronic device 101 may display changed view areas 1026 and 1027 as the function of the second software application is activated. For example, the view area 1026 may include the text (e.g., "It seems that the new function added today is not working properly. Can you quickly check this part?") written in the first language (e.g., English) and a text (e.g., 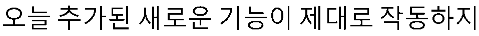 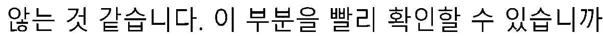 ?) written in a second language (e.g., Korean). Also, for example, the view area 1027 may include a text ("The same problem occurs with the apk you just sent. Please check again.") written in the first language (e.g., English) and a text (e.g., " 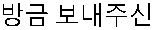 apk 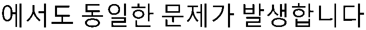 . 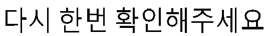 .") written in the second language (e.g., Korean). In this case, the view area 1026 may have a bigger size than the view area 1006. In addition, the view area 1027 may have a bigger size than the view area 1007.

In the example 1003, according to an embodiment, the electronic device 101 may display a text being written by the user based on at least a part of an input to the executable object 1010. For example, the electronic device 101 may display the input area 1018 that corresponds to at least a part of the input and includes a text (e.g., " 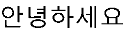 . 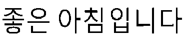 .") 1031 written in the second language (e.g., Korean). For example, the electronic device 101 may display the input area 1017 including a text (e.g., "Hello, good morning.") 1032 written in the first language (e.g., English) translated from the text (e.g., " 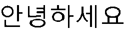 . 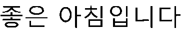 .") 1031 written in the second language (e.g., Korean) based on the keyboard translation function. According to an embodiment, the executable object 1010 may include an icon 1035 for transmitting a text. For example, as the activated icon 1015a is displayed, the icon 1035 may be displayed.

Referring to the example 1003, the electronic device 101 may display the text 1031 written in the second language together with the text 1032 written in the first language based on the keyboard translation function.

In the example 1004, according to an embodiment, the electronic device 101 may transmit a text being written to the other user of the chatting based on an input to the icon 1035. For example, the electronic device 101 may transmit the text 1032 written in the first language (e.g., English) based on the input to the icon 1035. In this case, the text 1031 written in the second language (e.g., Korean) may not be transmitted to the other user.

According to an embodiment, the electronic device 101 may display a view area 1040 including the text 1032 written in the first language and the text 1031 written in the second language (e.g., Korean) while the function of the second software application is activated. Referring to the example 1004, the electronic device 101 may display the view area 1027 and the view area 1040. For example, the view area 1040 may include the text (e.g., " 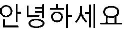 . 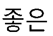 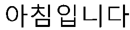 .") written in the second language (e.g., Korean), and the text (e.g., "Hello, good morning") written in the first language (e.g., English). In this case, in order to indicate that the text (e.g., " 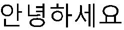 . 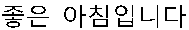 .") written in the second language (e.g., Korean) is not transmitted to the other user, the electronic device 101 may display a color of the text (e.g., " 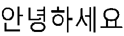 . 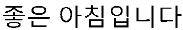 .") written in the second language (e.g., Korean) differently from a color of the text (e.g., "Hello, good morning") written in the first language (e.g., English). For example, a first visual effect (e.g., color) of the text (e.g., "Hello, good morning") written in the first language (e.g., English) may have a first color. For example, a second visual effect (e.g., color) of the text (e.g., " 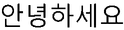 . 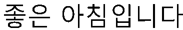 .") written in the second language (e.g., Korean) may have a second color. For example, a saturation of the first color may be higher than a saturation of the second color.

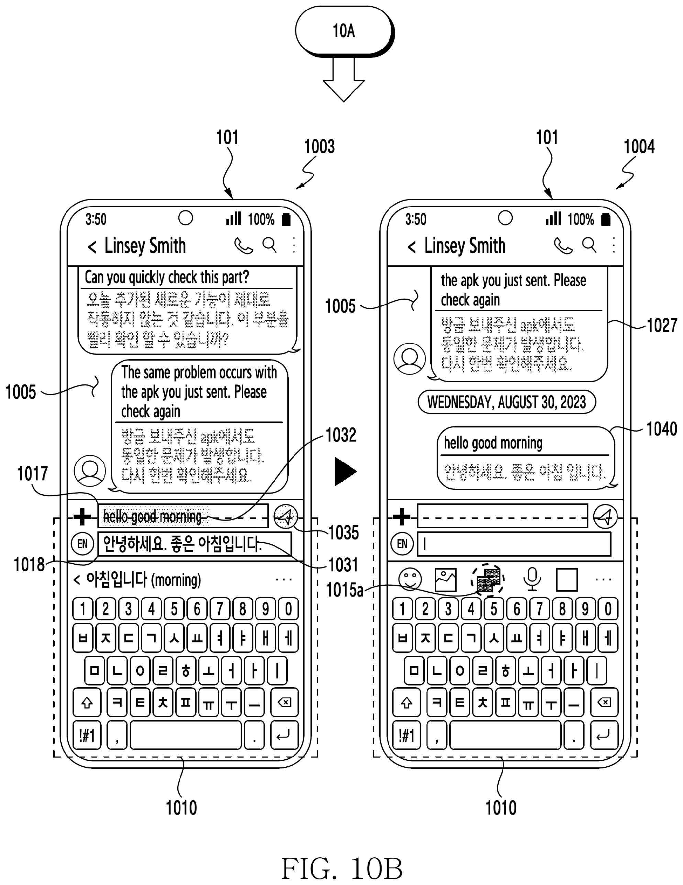

FIG. 10C illustrates an example of a screen displayed on an electronic device 1041 in a case that the user (e.g., Kim) of the electronic device 101 of FIGS. 10A and 10B transmits the text (e.g., " 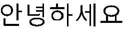 . 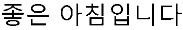 .") written in the second language (e.g., Korean) to a user (e.g., Linsey Smith) of the electronic device 1041.

Referring to FIG. 10C, the electronic device 1041 may display a screen 1045 in response to at least a part of an input to an icon (not illustrated) for the first software application. For example, the screen 1045 may include a plurality of view areas 1046, 1047, and 1048. For example, each of the plurality of view areas 1046, 1047, and 1048 may include a text written in the first language (e.g., English). For example, the view area 1048 may include a text (e.g., "hello good morning") written in the first language (e.g., English). Referring to FIGS. 10A and 10B, after inputting the text (e.g., " 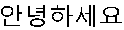 . 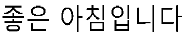 .") written in the second language (e.g., Korean) for the electronic device 101, the user (e.g., Kim) of the electronic device 101 may transmit the text (e.g., "hello good morning") translated into the first language (e.g., English) through the translation function of the keyboard application to the user (e.g., Linsey Smith) of the electronic device 1041. Accordingly, the electronic device 1041 may display the view area 1048 including the text (e.g., "hello good morning") written in the first language (e.g., English).

FIGS. 10D and 10E illustrate examples 1051, 1052, 1053, and 1054 of changing languages (e.g., a source language and a target language) of the function of the second software application, based on the electronic device 101 obtaining an input to an icon in an executable object of the keyboard application while the first software application that provides the messenger service is executed on the foreground. For example, the electronic device 101 of FIGS. 10D and 10E may be an example of the electronic device 101 of FIG. 3A.

Referring to the example 1051, according to an embodiment, the electronic device 101 may display the executable object 1010. For example, the electronic device 101 may display the executable object 1010 of the keyboard application. For example, the executable object 1010 may include a keyboard-shaped object provided through the keyboard application. For example, the executable object 1010 may at least partially superimposed on the screen of the first software application.

According to an embodiment, the executable object 1010 may include the icon 1015a for the keyboard translation function, the input area 1017 for displaying a translated text, and the icon 1019 for changing languages (e.g., a source language and a target language) of the keyboard translation function. For example, the icon 1015a may indicate an icon for activating a function for translation of a text being written by the keyboard application. In example 1051, the icon 1015a may be in an active state. For example, the input area 1017 may indicate an area (or a visual object) for displaying the translated text based on at least a part of an input to the executable object 1010. For example, icon 1019 may indicate an icon for changing the languages of the keyboard translation function of the keyboard application.

In the example 1052, according to an embodiment, the electronic device 101 may display icons 1061 and 1062 for changing the languages based on an input to the icon 1019. For example, the electronic device 101 may display an icon 1019a activated based on obtaining the input to the icon 1019. For example, the electronic device 101 may display the icons 1061 and 1062 in response to displaying the icon 1019a. For example, the icon 1061 may be an icon for setting a source language. For example, the icon 1062 may be an icon for setting a target language.

Referring to the example 1052 and the example 1053, according to an embodiment, the electronic device 101 may display a visual object 1070 for changing the source language in response to an input to the icon 1061. For example, the visual object 1070 may include icons 1071, 1072, and 1073 corresponding to a plurality of languages. For example, the icon 1071 may correspond to Auto. For example, the Auto may indicate a language of a text to be translated recognized by the electronic device 101. For example, the icon 1072 may correspond to English. For example, the icon 1073 may correspond to Korean. In the visual object 1070, the icon 1071 corresponding to the Auto may be fixed to the uppermost part in the visual object 1070. For example, when the visual object 1070 is displayed, the icon 1071 may be displayed at the uppermost part. For example, the icon 1072 and icon 1073 may be aligned in the visual object 1070 in an order of language set in the keyboard application in electronic device 101 or in an order of recently used language. For example, the electronic device 101 may change the source language to the English language based on obtaining an input to the icon 1072.

Referring to the example 1052 and the example 1054, according to an embodiment, the electronic device 101 may display a visual object 1080 for changing the target language in response to an input to the icon 1062. For example, the visual object 1080 may include icons corresponding to a plurality of languages. For example, the icon 1081 may correspond to Korean. Unlike the visual object 1070, the visual object 1080 may not include the icon corresponding to the Auto. For example, the electronic device 101 may change the target language to the Korean language based on obtaining an input to the icon 1081.

Although not illustrated in FIG. 10E, according to an embodiment, the visual object 1070 (or the visual object 1080) may further include an icon for adding a source language (or a target language). For example, the icon for the addition may include a text (e.g., "+ add languages"). For example, the electronic device 101 may display downloadable languages in response to obtaining an input to the icon for the addition. For example, electronic device 101 may download one of the displayed languages. For example, downloading a language may be understood substantially the same as storing information (e.g., language pack) for the language. For example, the electronic device 101 may change the downloaded language into the source language.

According to an embodiment, the electronic device 101 may change languages of the function of the second software application by changing the languages of the keyboard translation function. For example, the electronic device 101 may change the languages of the keyboard translation function based on an input to the icon 1061 (or the icon 1062). In this case, the languages (e.g., a source language and a target language) of the function of the second software application may correspond to the languages of the keyboard translation function. However, the embodiment of the present disclosure is not limited thereto. For example, the languages of the function of the second software application may be set in a menu in the system setting, as illustrated in FIG. 11 below.

FIG. 11 illustrates an example of a method of activating a function of a second software application in a system setting, according to an embodiment.

FIG. 11 illustrates an example 1100 of a method of activating the function of the second software application in the system setting for overall setting of an electronic device 101. For example, the electronic device 101 of FIG. 11 may be an example of the electronic device 101 of FIG. 3A.

Referring to the example 1100, the electronic device 101 may display a screen 1110 for the system setting. For example, the electronic device 101 may display the screen 1110 based on at least a part of an input of a user. For example, the screen 1110 may include a plurality of menus. For example, the plurality of menus may include a menu for a connection with an external electronic device, a menu for sound outputted from the electronic device 101, a menu for a display of the electronic device 101, and a menu 1115 for a keyboard application. The screen 1110 of FIG. 11 is only an example for convenience of explanation, and embodiments of the present disclosure are not limited thereto.

According to an embodiment, the electronic device 101 may display a screen 1120 including a plurality of sub menus for setting the keyboard application based on an input to the menu 1115. For example, the plurality of sub menus of the screen 1120 may include sub menus indicating types of languages available, sub menus for smart typing, and a sub menu 1125 for live translation. For example, the live translation may indicate the function of the second software application. The screen 1120 of FIG. 11 is only an example for convenience of explanation, and the embodiments of the present disclosure are not limited thereto.

According to an embodiment, the electronic device 101 may display a screen 1130 including icons for setting the function of the second software application based on an input to the sub menu 1125. For example, the screen 1130 may include an icon 1131 for activating the function of the second software application, and icons 1132 and 1133 for setting languages (e.g., a source language and a target language) of the function of the second software application. For example, the icon 1131 may include a toggle. For example, the icon 1132 may be used to set the target language of the function of the second software application. For example, the icon 1133 may be used to set the source language of the function of the second software application. For example, the visual object 1070 and the visual object 1080 of FIG. 10E may be displayed based on an input to the icon 1132 or the icon 1133.

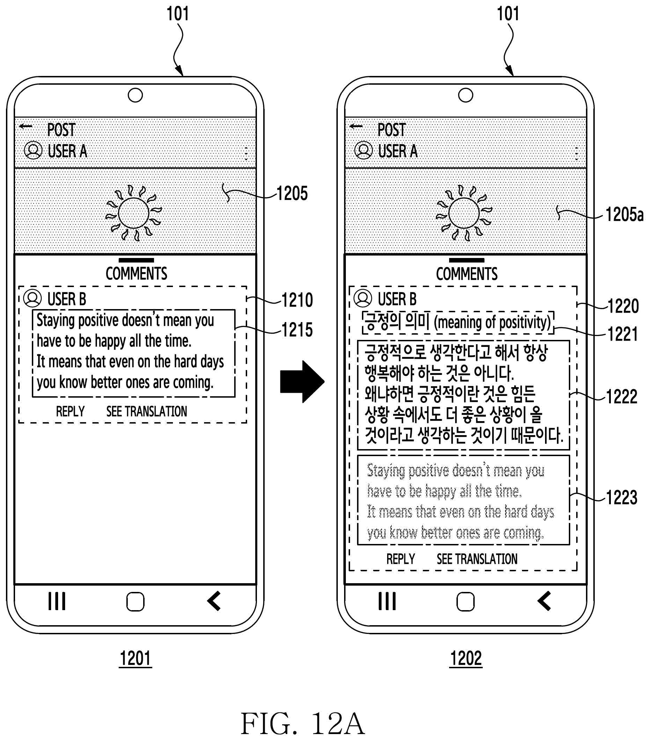

FIG. 12A illustrates an example of a method of providing summary information of contents, according to an embodiment.

FIG. 12A illustrates examples 1201 and 1202 of a method in which an electronic device 101 provides the summary information through the function of the second software application. For example, the electronic device 101 of FIG. 12A may be an example of the electronic device 101 of FIG. 3A.

Referring to the example 1201, the electronic device 101 may display a screen 1205 of a first software application that provides SNS. For example, the screen 1205 may display a view area 1210. For example, the view area 1210 may include a text (e.g., "Staying positive doesn't mean you have to be happy all the time. It means that even on the hard days you know better ones are coming.") 1215 written in a first language (e.g., English).

Although not illustrated in FIG. 12A, according to an embodiment, the electronic device 101 may activate the function of the second software application. For example, the electronic device 101 may activate the function based on an event (e.g., an automatic event or a manual event) for activating the function of the second software application.

Referring to the example 1202, the electronic device 101 may display a reconstructed screen 1205a. For example, the electronic device 101 may display the reconstructed screen 1205a through the activated function of the second software application. For example, the screen 1205a may include a reconstructed view area 1220. For example, the view area 1220 may include a text (e.g., "Staying positive doesn't mean you have to be happy all the time. It means that even on the hard days you know better ones are coming.") 1223 written in the first language (e.g., English), and a text (e.g., " 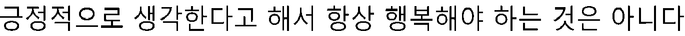 . 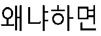 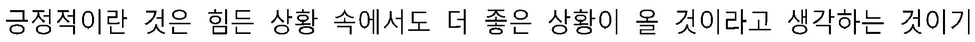 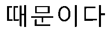 .") 1222 written in a second language (e.g., Korean). For example, the text 1222 may be a text translated from the text 1215 (or the text 1223) through the function of the second software application. For example, the text 1222 may be generated from the text 1215 (or the text 1223) based on a translation model.

According to an embodiment, the view area 1220 may further include summary information 1221. For example, the view area 1220 may further include the summary information 1221 generated through the activated function of the second software application. For example, the summary information 1221 may be generated based on another model while generating the text 1222 from the text 1215 (or the text 1223) based on the translation model. According to an embodiment, the electronic device 101 may determine whether a length of the text 1215 (or the text 1223) exceeds a reference length. For example, in a case that the length exceeds the reference length, the electronic device 101 may generate a summary of the text 1215 (or the text 1223) by using the other model. For example, the summary may be referred to as summary information.

For example, the other model may include a large language model (LLM). For example, the other model may be stored in the second software application or installed in the electronic device 101. For example, the other model may be referred to as an analytic model. In the example, a case where the translation model is different from the other model is described, but an embodiment of the present disclosure is not limited thereto. For example, the other model may be the same as the translation model.

For example, the summary information 1221 may include a text (e.g., " 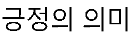 ", "meaning of positivity") written in the second language (e.g., Korean). For example, the other model may generate a text in which the text 1215 (or the text 1223) is summarized by using the text 1215 (or the text 1223). For example, the summary information 1221 may include the summarized text.

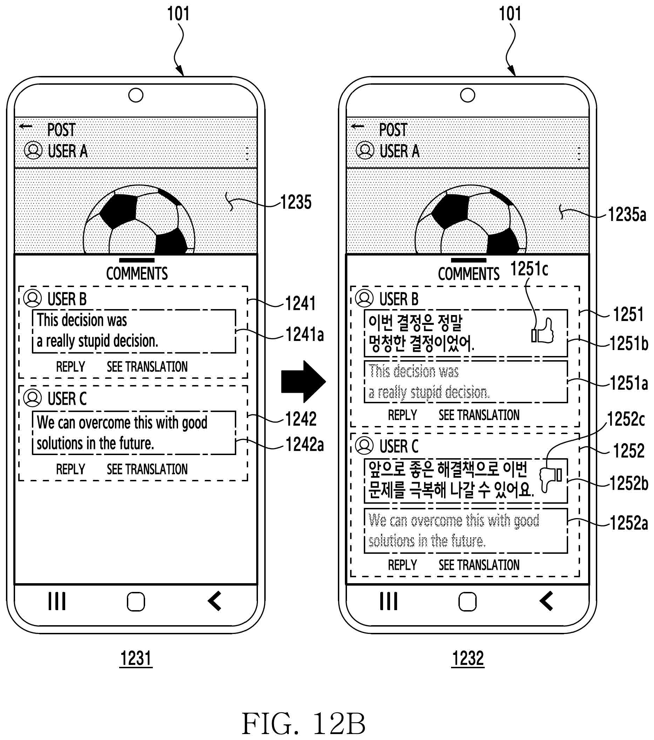

FIG. 12B illustrates an example of a method of providing a visual effect for contents, according to an embodiment.

FIG. 12B illustrates examples 1231 and 1232 of a method in which the electronic device 101 provides the summary information through the function of the second software application. For example, the electronic device 101 of FIG. 12B may be an example of the electronic device 101 of FIG. 3A.

Referring to the example 1231, the electronic device 101 may display a screen 1235 of the first software application that provides SNS. For example, the screen 1235 may display view areas 1241 and 1242. For example, the view area 1241 may include a text (e.g., "This decision was a really stupid decision.") 1241a written in the first language (e.g., English). For example, the view area 1242 may include a text (e.g., "We can overcome this with good solutions in the future.") 1242a written in the first language (e.g., English).

Although not illustrated in FIG. 12B, according to an embodiment, the electronic device 101 may activate the function of the second software application. For example, the electronic device 101 may activate the function based on an event (e.g., an automatic event or a manual event) for activating the function of the second software application.

Referring to the example 1232, the electronic device 101 may display a reconstructed screen 1235a. For example, the electronic device 101 may display the reconstructed screen 1235a through the activated function of the second software application. For example, the screen 1235a may include reconstructed view areas 1251 and 1252. For example, the view area 1251 may include a text (e.g., "This decision was a really stupid decision.") 1251a written in the first language (e.g., English), and a text (e.g., " 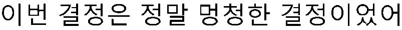 .") 1251b written in the second language (e.g., Korean). For example, the view area 1252 may include a text (e.g., "We can overcome this problem with good solutions in the future.") 1252a written in the first language (e.g., English), and a text e.g., " 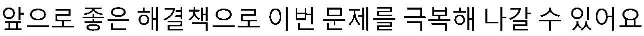 .") 1252b written in the second language (e.g., Korean).

According to an embodiment, the electronic device 101 may provide notification information for the reconstructed view areas 1251 and 1252. For example, the electronic device 101 may apply first notification information 1251c with respect to the view area 1251. For example, the electronic device 101 may apply second notification information 1252c with respect to the view area 1252. For example, the first notification information 1251c may include a display of a first visual object (e.g., an image indicating good) in the view area 1251. For example, the second notification information 1252c may include a display of a second visual object (e.g., an image indicating bad) in the view area 1252. However, the embodiment of the present disclosure is not limited thereto. For example, the first notification information 1251c may include displaying a background color of the view area 1251 in a first color, and the second notification information 1252c may include displaying a background color of the view area 1252 in a second color different from the first color.

According to an embodiment, the electronic device 101 may analyze the text 1241a (or the text 1251a) written in the first language (e.g., English) through the translation model, while generating the text 1251b written in the second language (e.g., Korean) from the text 1241a (or the text 1251a) written in the first language (e.g., English) through the translation model. For example, the electronic device 101 may analyze contents of the text 1241a (or the text 1251a) written from the text 1241a (or the text 1251a) written in the first language (e.g., English) by using the other model. For example, the electronic device 101 may identify that the contents of the text 1241a (or the text 1251a) is negative by using the other model. Thereafter, in a case that the contents of the text 1241a (or the text 1251a) is negative, the electronic device 101 may display the view area 1251 to which the first visual effect is applied.

In addition, according to an embodiment, the electronic device 101 may analyze the text 1242a (or the text 1252a) written in the first language (e.g., English) through the translation model while generating the text 1252b written in the second language (e.g., Korean) from the text 1242a (or the text 1252a) written in the first language (e.g., English) through the translation model. For example, the electronic device 101 may analyze contents of the text 1242a (or the text 1252a) written from the text 1242a (or the text 1252a) written in the first language (e.g., English) by using the other model. For example, the electronic device 101 may identify that the contents of the text 1242a (or the text 1252a) is positive by using the other model. Thereafter, in a case that the contents of the text 1242a (or the text 1252a) is negative, the electronic device 101 may display the view area 1252 to which a second visual effect is applied.

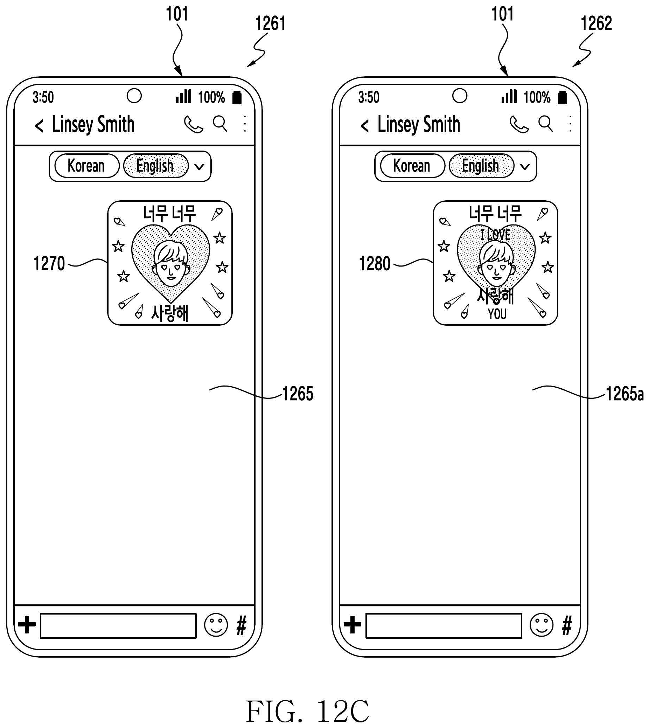

FIG. 12C illustrates an example of a method of translating a text in contents having an image and displaying a screen including the translated text, according to an embodiment.

FIG. 12C illustrates an example of a method in which the electronic device 101 translates the text in the image and displays a screen including contents having another image including a translated text through the function of the second software application. For example, the electronic device 101 of FIG. 12C may be an example of the electronic device 101 of FIG. 3A.

Referring to an example 1261, the electronic device 101 may display a screen 1265 of a first software application that provides a messenger service. For example, the screen 1265 may display view areas. For example, a view area 1270 may include contents having an image. For example, the image may include a text (e.g., " 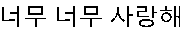 ") written in a first language (e.g., Korean), and an emoji. For example, the emoji may include a sticker or an emoticon. For example, the image may include a picture or a graphics interchange format (GIF) file.

Although not illustrated in FIG. 12C, according to an embodiment, the electronic device 101 may activate the function of the second software application. For example, the electronic device 101 may activate the function based on an event (e.g., an automatic event or a manual event) for activating the function of the second software application.

According to an embodiment, the electronic device 101 may obtain hierarchy information from the first software application. For example, the hierarchy information may include first information for the view area 1270. For example, the first information for the view area 1270 may include the image. For example, the electronic device 101 may extract, through a contents capture function of the second software application, the image and extract a text (e.g., " 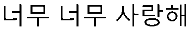 ") from the image. In other words, the electronic device 101 may extract the text in the image by analyzing the image (or photograph, GIF file) through the contents capture function.

For example, the electronic device 101 may recognize whether translation for the text is required on a framework. For example, in a case that the translation for the text is required, the electronic device 101 may translate the text into a text (e.g., "I love you") written in a second language (e.g., English) through a translation model. Thereafter, the electronic device 101 may generate (or reconstruct) another image including the text (e.g., "I love you") written in the second language (e.g., English), the text (e.g., " 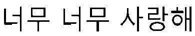 ") written in the first language (e.g., Korean), and the emoji. For example, the electronic device 101 may reconstruct the first information for the view area 1270 based on information for the other image.

Referring to an example 1262, the electronic device 101 may display a reconstructed screen 1265a. For example, the electronic device 101 may display the reconstructed screen 1265a through the activated function of the second software application. For example, the screen 1265a may include reconstructed view areas. For example, a view area 1280 may be generated through the reconstructed first information. For example, the view area 1280 may be a view area changed (or reconstructed) from the view area 1270. For example, the view area 1280 may include contents having the other image. For example, the other image may include the text (e.g., "I love you") written in the second language (e.g., English), the text (e.g., " 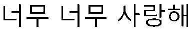 ") written in the first language (e.g., Korean), and the emoji.

Referring to FIG. 12C, the reconstructed view area 1280 may have substantially the same size as the view area 1270. For example, the view area 1280 may have the same size as the view area 1270. In this case, even if the contents of the view area 1280 are changed (e.g., addition of a translated text in the image), the view area 1280 may have the same size as the view area 1270. However, the embodiment of the present disclosure is not limited thereto. For example, as the contents of the view area 1280 are changed, the size of the view area 1280 may be changed.

In FIG. 12C, it is illustrated that the other image includes the text (e.g., "I love you") written in the second language (e.g., English), the text (e.g., " 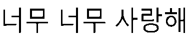 ") written in the first language (e.g., Korean), and the emoji, but the embodiment of the present disclosure is not limited thereto. For example, the other image may include the text (e.g., "I love you") written in the second language (e.g., English), and the emoji.

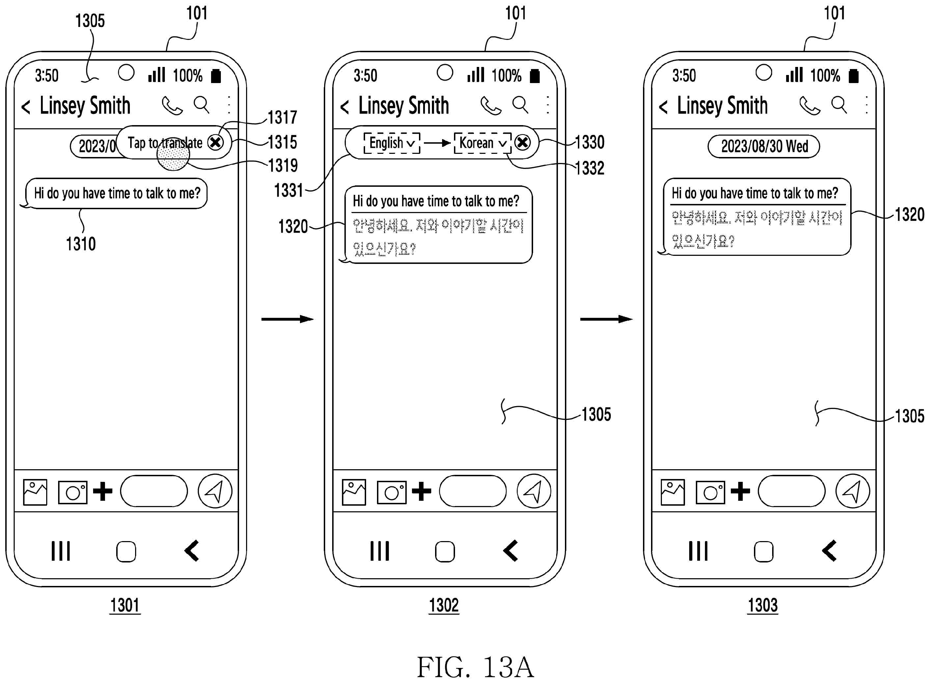

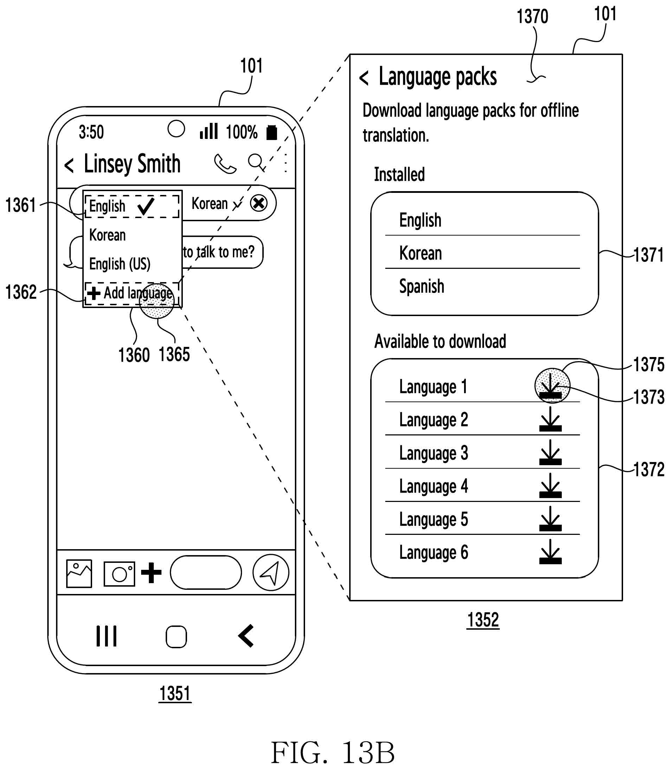

FIGS. 13A and 13B illustrate an example of a method of changing a setting of a second software application through an input to a visual object, according to an embodiment.

FIG. 13A illustrates examples 1301, 1302, and 1303 of executing the function of the second software application based on an electronic device 101 obtaining an input to a visual object floated (or displayed) while a first software application that provides a messenger services is executed on a foreground. For example, the electronic device 101 of FIG. 13A may be an example of the electronic device 101 of FIG. 3A.

Referring to the example 1301 of FIG. 13A, according to an embodiment, the electronic device 101 may display a screen 1305 in response to at least a part of an input for an icon (not illustrated) for the first software application. For example, the screen 1305 may include a screen indicating chatting between a user (e.g., Kim of FIG. 10C) of the electronic device 101 and another user (e.g., Linsey Smith) through the first software application. For example, the screen 1305 may include a view area 1310. For example, the view area 1310 may include a text (e.g., "Hi, do you have time to talk to me?") written in a first language (e.g., English).

According to an embodiment, the electronic device 101 may display a visual object 1315 when starting to display the screen 1305 indicating the chatting with the other user. For example, when the screen 1305 is displayed, the electronic device 101 may display the visual object 1315 floated with respect to the screen 1305. For example, the visual object 1315 may be used to inquire whether to execute a live translation function of the second software application. For example, the visual object 1315 may include an icon 1317 for removing the visual object 1315. For example, the visual object 1315 may be displayed in a partial area (e.g., upper right) of the screen 1305.

According to an embodiment, the electronic device 101 may execute the live translation function of the second software application in response to obtaining an input 1319 to an area different from an area of the icon 1317 among the visual object 1315. Referring to the example 1302, the electronic device 101 may display a changed view area 1320. For example, the view area 1320 may include the text (e.g., "Hi, do you have time to talk to me?") written in the first language (e.g., English), and a text (e.g., " 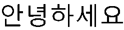 , 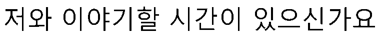 ?") written in a second language (e.g., Korean). In addition, referring to the example 1302, the electronic device 101 may display a visual object 1330 for changing languages (e.g., a source language and a target language) of the function of the second software application in response to obtaining the input 1319. In this case, in response to obtaining the input 1319, the electronic device 101 may cease displaying the visual object 1315 and display the visual object 1330. For example, the visual object 1330 may be displayed in a state floated on the screen 1305. According to an embodiment, the visual object 1330 may include an icon 1331 for changing the source language (e.g., English) and an icon 1332 for changing the target language (e.g., Korean).

According to an embodiment, the electronic device 101 may cease displaying the visual object 1330 in a case that a designated time interval elapses from a timing when the visual object 1330 starts to be displayed. Referring to the example 1303, the electronic device 101 may cease displaying the visual object 1330 and display the view area 1320 of the screen 1305 after the designated time interval (e.g., N seconds) from the timing when the visual object 1330 is displayed.

Although not shown in FIG. 13A, according to an embodiment, in response to obtaining an input to the icon 1317, the electronic device 101 may cease displaying the visual object 1315 without executing the live translation function of the second software application. In a case that the electronic device 101 displays another screen indicating chatting with still another user different from the other user (e.g., Lynsey Smith), a visual object to be used to inquire whether to execute the live translation function of the second software application may be displayed on the other screen.

According to an embodiment, the electronic device 101 may display the visual object 1315 again in a case that a designated time interval (e.g., M seconds) elapses from a timing when the display of the visual object 1315 is ceased in response to obtaining the input to the icon 1317. For example, the electronic device 101 may display the visual object 1315 again in the partial areas by recognizing that the designated time interval (e.g., M seconds) elapses from the timing when the display of the visual object 1315 is ceased. Alternatively, the electronic device 101 may display the visual object 1315 again by obtaining an input for writing a message (or an input for executing a keyboard application) after the display of the visual object 1315 is ceased. Alternatively, the electronic device 101 may display the visual object 1315 again based on obtaining an input to the partial area in which the visual object 1315 is displayed after the display of the visual object 1315 is ceased. For example, the input to the partial area may include a swipe input.

FIG. 13B illustrates examples 1351 and 1352 of changing the languages (e.g., the source language and the target language) of the function of the second software application based on obtaining an input to the icon 1331 or the icon 1332 in the example 1302 of FIG. 13A. For example, the electronic device 101 of FIG. 13B may be an example of the electronic device 101 of FIG. 3A.

Referring to the example 1351, according to an embodiment, the electronic device 101 may display a visual object 1360 displaying a list for changing the source language as an input to the icon 1331 is obtained. For example, the visual object 1360 may include an icon 1361 indicating a language currently used as the source language and icons indicating languages that may be used as the source language. In addition, for example, the visual object 1360 may include an icon 1362 for addition of a source language. For example, the icon 1362 for the addition may include a text (e.g., "+ add language").

Referring to the example 1351, the icon 1361 indicating the language currently used as the source language may have a different visual effect from icons indicating the languages that may be used as the source language. For example, the visual effect may include addition of a color or a check mark of a text indicating the language.

Referring to the examples 1351 and 1352, according to an embodiment, the electronic device 101 may display a visual object 1370 for adding source language packs by obtaining an input 1365 for the icon 1362 for the addition. For example, the electronic device 101 may display the visual object 1370 that includes a first part 1371 including information (or a language pack) for already installed (or downloaded) languages and a second part 1372 including information for installable (or downloadable) languages. For example, the first part 1371 may include information for English, Korean, and Spanish. For example, the second part 1372 may include information for a language #1 (e.g., Japanese), a language #2, a language #3, a language #4, a language #5, and a language #6. Based on obtaining an input 1375 for an icon 1373 that executes downloading of information for the language #1 (e.g., Japanese), the electronic device 101 may download the information for the language #1. Although not illustrated in FIG. 13B, in a case that the information for the language #1 is downloaded, the language #1 may be removed from the second part 1372 of the visual object 1370 and displayed in the first part 1371.

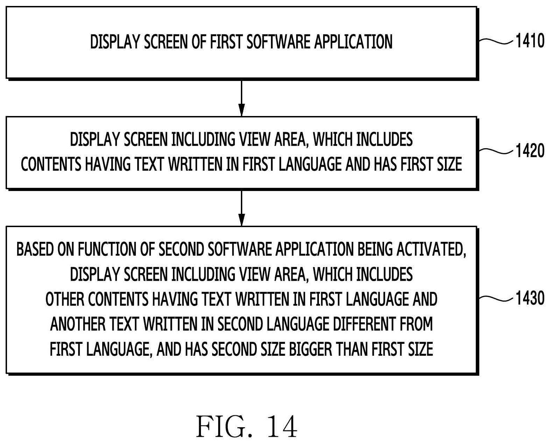

FIG. 14 illustrates an example of an operation flow for a method in which an electronic device translates contents included in a screen of a software application and displays a screen including a translated text, according to an embodiment.

At least a part of the method of FIG. 14 may be performed by the electronic device 101 of FIG. 3A. For example, the at least a part of the method may be controlled by a processor 310 of the electronic device 101. In the following embodiment, each operation may be sequentially performed, but is not necessarily performed sequentially. For example, an order of each operation may be changed, and at least two operations may be performed in parallel.

According to an embodiment, in operation 1410, the electronic device 101 may display a screen of a first software application. According to an embodiment, while the first software application is being executed, the electronic device 101 may display the screen, which is an execution screen of the first software application. For example, the screen may be referred to as a user interface (UI). The first software application may be executed on a foreground.

For example, the screen may be a screen that provides an object executable through interaction (e.g., a touch input) with a user while the first software application is being executed, or provides contents including a visual object (e.g., a text, or an image). For example, the screen may include information for a plurality of areas.

According to an embodiment, in operation 1420, the electronic device 101 may display the screen including a view area, which includes contents having a text written in a first language and has a first size. For example, the electronic device 101 may display the screen including the view area, which includes the contents having the text written in the first language, and has the first size, based on at least a part of an input to the screen.

According to an embodiment, in operation 1430, based on the function of the second software application being activated, the electronic device 101 may display the screen including the view area, which includes other contents having the text written in the first language and another text written in a second language different from the first language, and has a second size bigger than the first size. For example, the electronic device 101 may display the screen including the view area, which includes the other contents and has the second size, based on the function of the second software application being activated while displaying the screen having the view area having the first size.

According to an embodiment, the electronic device 101 may obtain hierarchy information from the first software application while displaying the screen including the view area having the first size. For example, the electronic device 101 may obtain the hierarchy information by using a contents capture function of the second software application while the second software application is executed in a background. For example, the execution of the contents capture function may be performed according to a designated period, or according to an occurrence of an event such as a change in the screen of the first software application. For example, the hierarchy information may include information for a first area, a second area, a third area, and a fourth area. The hierarchy information may be hierarchy information for a part of a screen displayed on a display area of a display 160 of the electronic device 101 among screens that may be provided by the first software application.

According to an embodiment, the electronic device 101 may determine whether the function of the second software application is activated. For example, the function may be activated through a setting of the electronic device 101, or may be activated based on a specific event. For example, the function of the second software application may indicate a live translation function of obtaining the hierarchy information obtained from the first software application, performing translation of a text part (e.g., a text in the fourth area) recognized through a framework based on the obtained hierarchy information, and reconstructing the hierarchy information by using the translated text.

According to an embodiment, the electronic device 101 may recognize first information and second information in a case that the function of the second software application is activated. For example, the electronic device 101 may recognize the first information and the second information from the hierarchy information. For example, the electronic device 101 may recognize the first information and the second information through the second software application. For example, in a case that the function of the second software application is activated, the electronic device 101 may recognize, through the second software application, the second information for the text written in the first language in the hierarchy information and the first information for the view area having the first size.

According to an embodiment, the electronic device 101 may transfer the first information and the second information to a framework. For example, the electronic device 101 may transfer the first information and the second information recognized through the second software application to the framework. For example, the framework may include a view framework that manages view objects included in the hierarchy information. For example, the view objects may include contents including a screen, a screen object, a view area, and a text (and/or an image).

According to an embodiment, the electronic device 101 may determine whether to include a text written in a language different from a user language (or a target language). For example, the electronic device 101 may determine whether to include a text written in a language (e.g., the first language) different from the second language based on the second information. It is assumed that the user language (or the target language) is the second language. For example, as the function is activated, the electronic device 101 may determine whether the text written in the language different from the second language exists among texts included in the screen.

According to an embodiment, the electronic device 101 may execute a model for translation (hereinafter, a translation model) by recognizing the text written in the first language in the screen. For example, in a case that the text written in the first language is included in the screen, the electronic device 101 may transfer a request for translation from a translation framework of the framework to the second software application. For example, the request may include the second information. Alternatively, for example, the request may include a string of the text of the second information.

According to an embodiment, in response to the request, the electronic device 101 may execute the translation model for translating the text written in the first language. For example, the translation model may be implemented as a function of the second software application. However, an embodiment of the present disclosure is not limited thereto. For example, the translation model may be installed in a storage space in memory 330 of the electronic device 101. In a case that the translation model is installed in the storage space, the translation model may be executed according to a call of the second software application receiving the request.

According to an embodiment, the electronic device 101 may generate a translated text. For example, the electronic device 101 may transfer information (e.g., the second information) for the text written in the first language recognized in the framework to the translation model. For example, the electronic device 101 may perform translation for the text written in the first language in the second information by using the second information through the translation model. For example, the electronic device 101 may generate the other text translated into the second language from the text. For example, the electronic device 101 may generate third information for the other text.

According to an embodiment, the electronic device 101 may translate the text in the request through the translation model. For example, the electronic device 101 may translate the text written in the first language into the other text written in the second language through the translation model. For example, the second language may be provided from the second software application to the translation model. For example, the second software application may recognize a language of a text being inputted or a language set in a system setting of the electronic device 101 as the user language (or the target language).

In the example, an example of a method of performing translation through the translation model is described, but the embodiment of the present disclosure is not limited thereto. For example, without using the translation model, the electronic device 101 may translate the text written in the language different from the user language through an external electronic device (e.g., a server) that provides a translation service.

According to an embodiment, the electronic device 101 may transfer the third information to the framework. The framework may include the translation framework or the view framework. In a case that the framework work is the translation framework, the third information may be transferred to the view framework.

According to an embodiment, the electronic device 101 may update the hierarchy information. For example, the electronic device 101 may update (or reconstruct or change), based on the third information, the hierarchy information including the second information to the hierarchy information including the second information and the third information. In other words, the hierarchy information may be further include the third information together with the second information.

According to an embodiment, the electronic device 101 may display a changed screen. For example, the electronic device 101 may change (or reconstruct or update) the screen based on the hierarchy information including the third information and the second information while the first software application is executed, and display the changed screen through a display 320. For example, the changed screen may include the text and the other text that is translated text in the view area.

For example, the view area including the text (or the view area based on the second information) may have the first size. For example, a size of the view area including the text and the other text (or the view area based on the second information and the third information) may have the second size bigger than the first size.

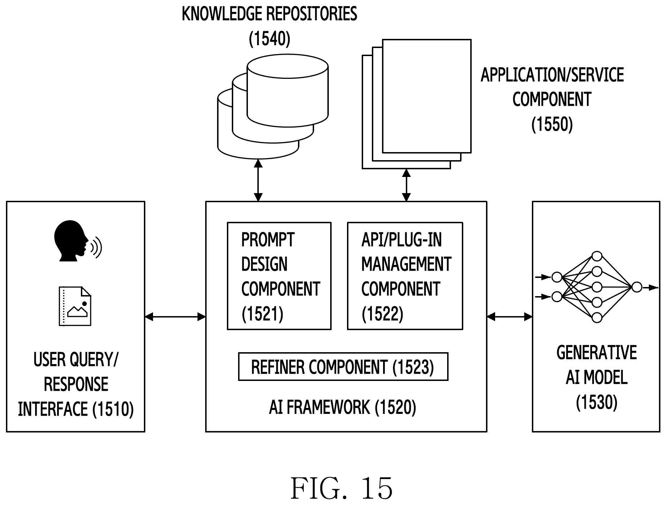

FIG. 15 illustrates an example of a generative artificial intelligence system, according to an embodiment. A generative artificial intelligence system 1500 of FIG. 15 illustrates an example of a system including a generative AI model 1530. The generative artificial intelligence system 1500 may be included in an electronic device 101. For example, the generative AI model 1530 may include the translation model 340 of FIG. 3A or the translation model 375 of FIG. 3B.

A user query/response interface 1510 may receive an input of a user. The input of the user may be in a form of a natural language, an image and/or a video. In addition, context information may also be transmitted when transmitting the input of the user. The context information may include additional information at a time point of the input of the user. For example, the various pieces of additional information may include application information currently used by the user or location information of the user. In addition, the input of the user may also be in a form in which the above-described natural language, image, sound, and context information are mixed. In addition, the user input may be in a non-natural form such as selecting a menu. The user query/response interface 1510 may output a result of the generative artificial intelligence system 1500 to the user. The output may be in a form of the natural language or specific contents, and may be provided in a form of an action requested by the user. The user query/response interface 1510 may output a result of the generative artificial intelligence system 1500 to the user. The output may be in a form of a natural language or specific contents, and may be provided in a form of an action requested by the user.

An AI framework 1520 may receive an input of the user and may coordinate and control each of components required to perform a user intention based on a user query.

The input of the user received from the user query/response interface 1510 may be transmitted to a prompt design component 1521. The prompt design component 1521 may be used to generate a prompt suitable for entering the input of the user into LLM or LMM. The prompt design component 1521 may be an AI component that uses a machine learning algorithm or a neural network to develop a better prompt over time. The prompt design component 1521 may generate a prompt by accessing knowledge repositories 1540 including user preference data, a prompt library, and a prompt example based on the input of the user, and may transfer the generated prompt to the LLM or the LMM.

An API/plug-in management component 1522 may serve to communicate with external information in a case that there is a request for additional information when transmitting the input of the user to an input of the generative model. The API/plug-in management component 1522 may establish a channel capable of communicating with the outside of an AI interface through API, and access various data sources through the established channel. In addition, in a case that the API/plug-in management component 1522 needs to perform, in an application/service component 1550, an action that finally performs the input of the user rather than an intermediate result, the API/plug-in management component 1522 may request the corresponding action through the API. Information obtained from the outside may be used to generate a prompt in the prompt design component 1521 together with the input of the user or may be transferred as an input of the generative AI model 1530.

A refiner component 1523 may finely tune a result outputted from the generative model. For example, the refiner component 1523 may verify whether contents generated through the LLM and/or the LMM are not irrelevant, whether the contents do not include a biased content, or whether the contents do not include a harmful content. In addition, in a case in which an additional process is required by determining to what extent the content matches a result desired by a user, the refiner component 1523 may also perform a corresponding process. The refiner component 1523 may by additionally configure a hint for avoiding undesired output and provide it to the user.

The generative AI model 1530 may generally refer to an artificial intelligence neural network that generates a new type of data by relying on user input information. The generative AI model 1530 may include a model that generates an image and/or a model that generates a language. The model that generates an image may include, as representative examples, a generative adversarial network (GAN) and a variational auto encoder (VAE), and may include, as an example, a Diffusion-based generative model using the VAE and a Transformer architecture. The model that generates a language may be a model trained to output a statistically most appropriate output value based on an input value, and may include, as representative examples, models such as CHAT-GPT 3 and CHAT-GPT 4. In addition, in the model that generates a language, there may be an large multimodal model (LMM) capable of recognizing various forms of data inputs such as a text, an image, and sound, and generating new data corresponding thereto.

Referring to the above, a device, a method, and a storage medium according to embodiments of the present disclosure may provide the user with contents translated in real time on the framework through the second software application while using the first software application. Accordingly, regardless of whether the first software application provides a translation function, convenience may be provided for the user to check the translated contents without performing an additional input.

Additionally, the device, the method, and the storage medium according to embodiments of the present disclosure may translate the contents of the first software application through the second software application and provide information reconstructed on the framework based on the translated text. In a case that a screen is displayed using the reconstructed information on the framework, a configuration (e.g., disposition, a size, a visual effect, or contents of view objects) of the screen may be optimized and changed according to a rule designated in the first software application. Accordingly, the device, the method, and the storage medium according to embodiments of the present disclosure may naturally display the screen further including the text translated according to the live translation function.

As described above, an electronic device 101 may comprise memory 330 storing instructions. The electronic device 101 may comprise a display 320. The electronic device 101 may comprise a processor 310. The instructions, when executed by the processor 310, may cause the electronic device 101 to, based on executing a first software application, display, via the display 320, a screen of the first software application. The instructions, when executed by the processor 310, may cause the electronic device 101 to, based on at least a part of an input for the screen, display, via the display 320, the screen including a view area including contents having a text written in a first language and having a first size. The instructions, when executed by the processor 310, may cause the electronic device 101 to, based on a function of a second software application being activated while displaying the screen including the view area having the first size, display, via the display 320, the screen including the view area, which includes other contents having the text written in the first language and another text written in a second language different from the first language, and has a second size bigger than the first size.

According to an embodiment, the first software application may not provide a function for translation from the first language to the second language in the first software application.

According to an embodiment, the instructions, when executed by the at least one processor 310, may cause the electronic device 101 to, in response to the at least a part of the input for the screen, display, via the display 320, a screen object of the first software application by at least partially superimposing the screen, and while the second software application including the function is executed in a background, obtain hierarchy information configuring the screen from the first software application. The screen object may include the view area including the contents.

According to an embodiment, the hierarchy information may be provided from the first software application to the second software application based on execution of another function for capturing contents of the second software application.

According to an embodiment, the instructions, when executed by the at least one processor 310, may cause the electronic device 101 to recognize, from the hierarchy information, first information for the view area having the first size and second information for the text written in the first language. The instructions, when executed by the at least one processor 310, may cause the electronic device 101 to transfer the first information and the second information to a framework of the electronic device 101. The first information may include an identifier of the view area, coordinates representing a position of the view area, and length values representing the first size of the view area. The second information may include a string of the text written in the first language, a color of the text, and a size of the text.

According to an embodiment, the instructions, when executed by the at least one processor 310, may cause the electronic device 101 to determine, via the framework, whether the view area includes a text written in a language different from the second language. The instructions, when executed by the at least one processor 310, may cause the electronic device 101 to, based on determining that the view area includes the text written in the first language different from the second language, execute an artificial intelligence model (AI model) for a translation in response to a request obtained from the framework.

According to an embodiment, the instructions, when executed by the at least one processor 310, may cause the electronic device 101 to generate the another text written in the second language from the text written in the first language by using the executed AI model. The instructions, when executed by the at least one processor 310, may cause the electronic device 101 to transfer third information for the generated another text to the framework. The instructions, when executed by the at least one processor 310, may cause the electronic device 101 to update, via the framework, the hierarchy information based on the third information. The view area having the second size may be displayed based on the third information.

According to an embodiment, the artificial intelligence model may be stored in the memory 330 of the electronic device 101 or included in the second software application.

According to an embodiment, the function may include a translation function for displaying the text written in the first language together with the another text written in the second language.

According to an embodiment, the instructions, when executed by the at least one processor 310, may cause the electronic device 101 to, based on at least a part of another input for the screen while displaying the screen including the view area having the second size and the function is activated, display, via the display 320, another screen changed from the screen. The another screen may include another view area having a text written in the first language and another text written in the second language.

According to an embodiment, the another input may include a scroll input for the screen. The another screen may include at least a part of the view area.

According to an embodiment, the function may be included in an executable object having a keyboard shape provided through a keyboard application of the electronic device 101, and may be activated based on an input to an icon for translation of a text displayed on a bar of the executable object.

According to an embodiment, the function may be activated based on an input for a sub menu associated with the function in a menu for a keyboard application of the electronic device 101. The menu for the keyboard application may be included in a system setting of the electronic device 101. The sub menu may include an icon for activating the function, and icons for setting the first language and the second language.

According to an embodiment, the instructions, when executed by the at least one processor 310, may cause the electronic device 101 to generate a summary, from the text written in the first language greater than a reference length, for the text by using an analytic model. The instructions, when executed by the at least one processor 310, may cause the electronic device 101 to display, via the display 320, the screen including the view area further including the summary together with the text and the another text.

According to an embodiment, the instructions, when executed by the at least one processor 310, may cause the electronic device 101 to determine, from the text written in the first language, a visual effect according to the contents having the text by using an analytic model. The instructions, when executed by the at least one processor 310, may cause the electronic device 101 to display, via the display 320, the screen including the view area having the visual effect.

According to an embodiment, the analytic model may include a large language model (LLM) trained based on the text written in the first language.

According to an embodiment, the contents of the view area having the first size may include an image including the text written in the first language. The another content of the view area having the second size may include another image including the text written in the first language and the another text written in the second language.

According to an embodiment, the text written in the first language of the view area having the first size may have a first color. The text written in the first language of the view area having the second size may have a second color with a saturation lower than a saturation of the first color. The another text written in the second language of the view area having the second size may have the first color.

As described above, a method performed by an electronic device 101 may comprise, based on executing a first software application, displaying a screen of the first software application. The method may comprise, based on at least a part of an input for the screen, displaying, via the display, the screen including a view area including contents having a text written in a first language and having a first size. The method may comprise, based on a function of a second software application being activated while displaying the screen including the view area having the first size, displaying the screen including the view area, which includes other contents having the text written in the first language and another text written in a second language different from the first language, and has a second size bigger than the first size.

As described above, a non-transitory computer-readable storage medium, when executed by a processor 310 of an electronic device 101 comprising a display 320, may store one or more programs including instructions that cause to, based on executing a first software application, display, via the display 320, a screen of the first software application. The non-transitory computer-readable storage medium, when executed by the processor 310, may store one or more programs including instructions that cause to, based on at least a part of an input for the screen, display, via the display, the screen including a view area including contents having a text written in a first language and having a first size. The non-transitory computer-readable storage medium, when executed by the processor 310, may store one or more programs including instructions that cause to, based on a function of a second software application being activated while displaying the screen including the view area having the first size, display, via the display 320, the screen including the view area, which includes other contents having the text written in the first language and another text written in a second language different from the first language, and has a second size bigger than the first size.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device 101 comprising:
memory 330 comprising one or more storage media storing instructions;
a display 320; and
at least one processor 310 comprising processing circuitry,
wherein the instructions, when executed individually or collectively by the at least one processor 310, cause the electronic device 101 to:
based on executing a first software application, display, via the display 320, a screen of the first software application;
based on at least a part of an input for the screen, display, via the display 320, the screen including a view area including contents having a text written in a first language and having a first size; and
based on a function of a second software application being activated while displaying the screen including the view area having the first size, display, via the display 320, the screen including the view area, which includes other contents having the text written in the first language and another text written in a second language different from the first language, and has a second size bigger than the first size.

2. The electronic device 101 of claim 1,
wherein the first software application does not provide a function for translation from the first language to the second language in the first software application.

3. The electronic device 101 of claim 1,
wherein the instructions, when executed individually or collectively by the at least one processor 310, cause the electronic device 101 to:
in response to the at least a part of the input for the screen:
display, via the display, a screen object of the first software application by at least partially superimposing the screen; and
while the second software application including the function is executed in a background, obtain hierarchy information configuring the screen from the first software application, and
wherein the screen object includes the view area including the contents.

4. The electronic device 101 of claim 3,
wherein the hierarchy information is provided from the first software application to the second software application based on execution of another function for capturing contents of the second software application.

5. The electronic device 101 of claim 3,
wherein the instructions, when executed individually or collectively by the at least one processor 310, cause the electronic device 101 to:
recognize, from the hierarchy information, first information for the view area having the first size and second information for the text written in the first language; and
transfer the first information and the second information to a framework of the electronic device 101,
wherein the first information includes an identifier of the view area, coordinates representing a position of the view area, and length values representing the first size of the view area, and
wherein the second information includes a string of the text written in the first language, a color of the text, and a size of the text.

6. The electronic device 101 of claim 5,
wherein the instructions, when executed individually or collectively by the at least one processor 310, cause the electronic device 101 to:
determine, via the framework, whether the view area includes a text written in a language different from the second language; and
based on determining that the view area includes the text written in the first language different from the second language, execute an artificial intelligence model (AI model) for a translation in response to a request obtained from the framework.

7. The electronic device 101 of claim 6,
wherein the instructions, when executed individually or collectively by the at least one processor 310, cause the electronic device 101 to:
generate the another text written in the second language from the text written in the first language by using the executed AI model; and
transfer third information for the generated another text to the framework; and
update, via the framework, the hierarchy information based on the third information, and
wherein the view area having the second size is displayed based on the third information.

8. The electronic device 101 of claim 1,
wherein the function includes a translation function for displaying the text written in the first language together with the another text written in the second language.

9. The electronic device 101 of claim 1,
wherein the instructions, when executed individually or collectively by the at least one processor 310, cause the electronic device 101 to:
based on at least a part of another input for the screen while displaying the screen including the view area having the second size and the function is activated, display, via the display 320, another screen changed from the screen, and
wherein the another screen includes another view area having a text written in the first language and another text written in the second language.

10. The electronic device 101 of claim 1,
wherein the function is activated based on an input for a sub menu associated with the function in a menu for a keyboard application of the electronic device 101,
wherein the menu for the keyboard application is included in a system setting of the electronic device 101,
wherein the sub menu includes:
an icon for activating the function, and
icons for setting the first language and the second language.

11. The electronic device 101 of claim 1,
wherein the instructions, when executed individually or collectively by the at least one processor 310, cause the electronic device 101 to:
generate a summary, from the text written in the first language greater than a reference length, for the text by using an analytic model; and
display, via the display 320, the screen including the view area further including the summary together with the text and the another text.

12. The electronic device 101 of claim 1,
wherein the instructions, when executed individually or collectively by the at least one processor 310, cause the electronic device 101 to::
determine, from the text written in the first language, a visual effect according to the contents having the text by using an analytic model; and
display, via the display 320, the screen including the view area having the visual effect.

13. The electronic device 101 of claim 1,
wherein the text written in the first language of the view area having the first size has a first color,
wherein the text written in the first language of the view area having the second size has a second color with a saturation lower than a saturation of the first color, and
wherein the another text written in the second language of the view area having the second size has the first color.

14. A method performed by an electronic device comprising:
based on executing a first software application, displaying a screen of the first software application;
based on at least a part of an input for the screen, displaying, via the display 320, the screen including a view area including contents having a text written in a first language and having a first size; and
based on a function of a second software application being activated while displaying the screen including the view area having the first size, displaying the screen including the view area, which includes other contents having the text written in the first language and another text written in a second language different from the first language, and has a second size bigger than the first size.

15. A non-transitory computer-readable storage medium, when executed individually or collectively by a processor 310 of an electronic device 101 comprising a display 320, stores one or more programs including instructions that cause to:
based on executing a first software application, display, via the display 320, a screen of the first software application;
based on at least a part of an input for the screen, display, via the display 320, the screen including a view area including contents having a text written in a first language and having a first size; and
based on a function of a second software application being activated while displaying the screen including the view area having the first size, display, via the display 320, the screen including the view area, which includes other contents having the text written in the first language and another text written in a second language different from the first language, and has a second size bigger than the first size.
